# EUROPEAN PATENT APPLICATION

(11) **EP 4 443 925 A1**
(43) Date of publication of application: **09.10.2024**
(21) Application number: 22914596.6
(22) Date of filing: 24.12.2022
(51) Int. Cl.: H04W 12/041

(54) **COMMUNICATION METHOD, APPARATUS, AND SYSTEM**

(30) Priority: 27.12.2021 CN 202111610706
(71) Applicant: Huawei Technologies Co., Ltd., Shenzhen, Guangdong 518129 (CN)
(72) Inventor: WU, Xiaoning, Shenzhen, Guangdong 518129 (CN); GENG, Tingting, Shenzhen, Guangdong 518129 (CN)
(74) Representative: Pfenning, Meinig & Partner mbB
(86) International application number: PCT/CN2022/141715
(87) International publication number: WO 2023/125342

(57) **Abstract**

Embodiments of this application provide a communication method, apparatus, and system. The method includes: determining first key configuration information, where the first key configuration information is used to configure a key corresponding to a first cell set, the first key configuration information includes one or more of first derivation configuration information, first derivation indication information, and first input parameter indication information, the first derivation configuration information indicates to perform derivation based on a first specified key, the first derivation indication information indicates a subsequently used derivation manner, the first input parameter indication information indicates to use a quantity of times of accessing a cell as an input parameter for deriving a key, and a first key is a key for communication with a first network device in a first cell of the first network device. In a possible embodiment of this application, a terminal may determine, based on key configuration information, a key corresponding to a cell in a cell set, to ensure subsequent information security.

## Description

### CROSS-REFERENCE TO RELATED APPLICATIONS

This application claims priority to Chinese Patent Application No. 202111610706.6, filed with the China National Intellectual Property Administration on December 27, 2021 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

In a wireless communication system, a key (key) is used to encrypt data and/or signaling, for example, a data radio bearer (data radio bearer, DRB) and/or a signaling radio bearer (signaling radio bearer, SRB), transmitted between a terminal (for example, a user equipment (user equipment, UE)) and a network device (for example, a base station) corresponding to a cell (which may also be referred to as an access cell, a serving cell, or the like) in which the terminal is located. For example, the key may be a bit sequence. Encrypted data and/or signaling can be decrypted only by using a corresponding key, to obtain plaintext.

How to maintain a key in a dynamic cell set to ensure consistency between a key on a UE side and a key on a network device side when the UE accesses the dynamic cell set is an urgent problem to be resolved.

### SUMMARY

Embodiments of this application provide a communication method, apparatus, and system, to maintain a key in a cell set and ensure communication security.

According to a first aspect, an embodiment of this application provides a communication method. The method may be performed by a terminal, or may be performed by a component (for example, a processor, a chip, or a chip system) of the terminal. For example, the method is performed by the terminal, and the method includes: communicating with a first network device in a first cell of the first network device by using a first key; and determining first key configuration information, where the first key configuration information is used to configure a key corresponding to a first cell set, the first key configuration information includes one or more of first derivation configuration information, first derivation indication information, and first input parameter indication information, the first derivation configuration information indicates to perform derivation based on a first specified key, the first derivation indication information indicates a derivation manner, the derivation manner includes horizontal derivation or vertical derivation, and the first input parameter indication information indicates to use a quantity of access times as an input parameter for deriving a key. In this solution, the terminal determines the first key configuration information, so that in a cell set corresponding to the terminal, it can be ensured that the terminal obtains, when accessing a network device, a corresponding key in time without triggering a handover procedure. This ensures information security between the terminal and the network device.

Optionally, the method further includes: determining a second key based on the first key configuration information, where the second key is a key for communication with a network device corresponding to a second cell in the first cell set.

Optionally, the determining first key configuration information includes: receiving the first key configuration information from the first network device.

Optionally, the determining first key configuration information includes: predefining or preconfiguring the first key configuration information.

Optionally, that the first derivation indication information indicates the terminal to determine, in a horizontal derivation manner, a key for accessing a cell in the first cell set may be understood as that the first derivation indication information indicates the terminal to subsequently use only the horizontal derivation manner.

In a possible implementation, the method further includes: sending an access message to the second cell.

In a possible manner, the sending an access message includes sending a preamble to the second cell.

In another possible manner, the sending an access message includes indicating to access the second cell, which may be understood as that the terminal is indicated to access the second cell.

In a possible implementation, the determining a second key based on the first key configuration information includes: determining the second key based on the first key configuration information and cell information corresponding to the second cell, where the cell information includes one or more of downlink frequency information and physical cell identifier information.

Optionally, the first specified key includes the first key, a latest historical key in one or more historical keys corresponding to the second cell, or a key corresponding to an original cell, and the original cell is a cell that determines the first cell set. Optionally, determining the first cell set includes generating or updating the first cell set.

Optionally, the second cell is a target cell.

Optionally, which historical key is the latest historical key is determined based on information about the quantity of access times.

Optionally, a manner of determining the second key is predefined or preconfigured.

In a possible implementation, the method further includes: determining the first cell set or updating the first cell set. Optionally, first cell set configuration information from the first network is received, where the first cell set configuration information is used to configure the first cell set. The first cell set is determined based on the first cell set configuration information.

Optionally, the first cell set configuration information includes the first key configuration information.

In a possible implementation, the method further includes: storing the first key and/or the second key.

Optionally, after a connection with the second cell is disconnected, the second key is used as a historical key corresponding to the second cell. Optionally, after a connection with the first cell is disconnected, the first key is used as a historical key corresponding to the first cell.

Optionally, the terminal determines, based on implementation, whether to delete a historical key to save storage space and avoid storing excessive historical keys, for example, delete a part of historical keys corresponding to the second cell.

Optionally, the quantity of access times includes a quantity of times of accessing the cell in the first cell set, and/or a quantity of times of accessing the cell in the first cell set and a quantity of times of accessing a cell not in the first cell set, and/or a quantity of times of accessing the second cell. For example, the quantity of access times is a quantity of times of accessing the second cell by the terminal after the second cell joins the first cell set.

In a possible implementation, the method further includes: receiving second key configuration information from the network device corresponding to the second cell, where the second key configuration information is used to configure the key corresponding to the first cell set, the second key configuration information includes one or more of second derivation configuration information, second derivation indication information, and second input parameter indication information, the second derivation configuration information indicates to perform derivation based on a second specified key, the second derivation indication information indicates a derivation manner, and the second input parameter indication information indicates to use the quantity of access times as the input parameter for deriving the key; and deriving a third key based on the second key configuration information, where the third key is a key for communication with a network device corresponding to a third cell in the first cell set.

Optionally, the second specified key includes the second key or a latest historical key in one or more historical keys corresponding to the third cell.

Optionally, the first cell set is a dynamic cell set.

Optionally, the key is for security protection of data and/or signaling, and the security protection includes encryption and/or integrity protection.

According to a second aspect, an embodiment of this application provides a communication method. The method may be performed by a network device (for example, a first network device), or may be performed by a component (for example, a processor, a chip, or a chip system) of the network device. For example, the method is performed by the network device, and the method includes: communicating with a terminal in a first cell by using a first key; deriving a first key set, where the first key set includes Q keys, there is a correspondence between the Q keys and N cells in a first cell set, the N cells are cells of M network devices, the first cell set corresponds to the terminal, and Q, N, and M are integers greater than or equal to 1; and sending second key information to a network device corresponding to a second cell in the first cell set, where the second key information includes a second candidate key, the first key set includes the second candidate key, and the second key information is used to configure a key corresponding to the second cell. In this solution, a network device corresponding to a cell that currently serves the terminal actively sends a candidate key to another network device of the first cell set, so that when the terminal performs access in the first cell set, the network device can obtain a key in time. This ensures communication security.

Optionally, the method further includes: sending first key configuration information to the terminal, where the first key configuration information is used to configure a key corresponding to the first cell set, the first key configuration information includes one or more of first derivation configuration information, first derivation indication information, and first input parameter indication information, the first derivation configuration information indicates to perform derivation based on a first specified key, the first derivation indication information indicates a derivation manner, the derivation manner includes horizontal derivation or vertical derivation, the first input parameter indication information indicates to use a quantity of access times of the terminal as an input parameter for deriving a key, and the first cell set corresponds to the terminal. In this solution, key configuration information corresponding to a cell set is sent to the terminal, so that the terminal generates the key in time. This ensures the communication security.

In an optional implementation, the deriving a first key set includes: deriving the first key set based on one or more of the first key, next hop information, and information about a cell in the first cell set, where the cell information includes one or more of downlink frequency information and physical cell identifier information.

Optionally, the first specified key includes the first key or a latest historical key in one or more historical keys corresponding to a target cell of the terminal in the first cell set.

Optionally, that the first derivation indication information indicates the terminal to determine, in a horizontal derivation manner, a key for accessing the cell in the first cell set may be understood as that the first derivation indication information indicates the terminal to subsequently use only the horizontal derivation manner.

Optionally, the quantity of access times includes a quantity of times of accessing the cell in the first cell set by the terminal, and/or a quantity of times of accessing the cell in the first cell set and a quantity of times of accessing a cell not in the first cell set by the terminal, and/or a quantity of times of accessing the target cell in the first cell set.

Optionally, that there is a correspondence between the Q keys and N cells in a first cell set includes: The Q keys are in one-to-one correspondence with the N cells, where Q=N.

Optionally, the deriving a first key set includes: when deriving the first key set, using the quantity of access times of the terminal as one of derivation input parameters.

Optionally, the method further includes: determining the first cell set, where the determining the first cell set includes: obtaining the first cell set, or updating the first cell set.

Optionally, the method further includes: storing the first key, and after disconnecting a connection with the terminal in the first cell, using the first key as a historical key corresponding to the first cell.

Optionally, the method further includes: disconnecting the connection with the terminal in the first cell.

Optionally, the method further includes: receiving an access message from the terminal, where the access message indicates to access the first cell; and determining a third key, where the third key is a key for communication with the terminal in the first cell.

Optionally, the determining a third key includes: determining the third key based on a latest historical key in one or more historical keys corresponding to the first cell.

Optionally, the method further includes: storing the third key, and after disconnecting the connection with the terminal in the first cell, using the third key as the historical key corresponding to the first cell.

Optionally, the determining a third key includes: receiving at least one key that is corresponding to the first cell and that is sent by at least one of the M network devices; and determining the third key based on a latest key in the at least one key.

According to a third aspect, an embodiment of this application provides a communication method. The method may be performed by a network device (for example, a second network device), or may be performed by a component (for example, a processor, a chip, or a chip system) of the network device. For example, the method is performed by the network device, and the method includes: receiving second key information sent by a first network device, where the second key is used to configure a key corresponding to a second cell in a first cell set, the second key information includes a second candidate key, the first network device is a network device corresponding to a first cell in the first cell set, and the first cell set corresponds to a terminal; and determining a second key based on one or more of the second key information, a latest historical key in one or more historical keys corresponding to the second cell, and a quantity of access times, where the historical key includes a historical key between the terminal and the second cell, and the second key is a key for communication with the terminal in the second cell. According to this solution, a network device in the first cell set determines, by receiving key information sent by the first network device, a communication key used by the terminal when the terminal performs access in the cell set. This ensures communication security.

Optionally, the determining a second key includes: when the terminal accesses the second cell for a first time, using the second candidate key as the second key.

Optionally, the determining a second key includes: when the terminal accesses the second cell not for a first time, determining the second key based on the latest historical key in the one or more historical keys corresponding to the second cell.

Optionally, the method further includes: receiving an access message from the terminal.

Optionally, the method further includes: storing the second key. Optionally, after a connection with the terminal in the second cell is disconnected, the second key is used as a historical key corresponding to the second cell.

According to a fourth aspect, a communication apparatus is provided. The communication apparatus may be the terminal device in any one of the first aspect to the third aspect, or an electronic device configured in the terminal device, or a large device including the terminal device. The terminal device includes a corresponding means (means) or module configured to perform the foregoing methods. For example, the communication apparatus includes a processing unit (sometimes referred to as a processing module) and a transceiver unit (sometimes referred to as a transceiver module). The processing module is configured to determine first key configuration information, where the first key configuration information is used to configure a key corresponding to a first cell set.

Optionally, the processing unit is configured to determine a second key based on the first key configuration information, where the second key is a key for communication with a network device corresponding to a second cell in the first cell set.

For another example, the processing unit is coupled to a storage unit, and is configured to execute instructions in the storage unit, to implement the method performed by the terminal in any one of the first aspect to the third aspect.

For another example, the communication apparatus includes a processor. The processor is coupled to a memory, and is configured to execute instructions in the memory, to implement the method performed by the terminal in any one of the first aspect to the third aspect. Optionally, the communication apparatus further includes other components, for example, an antenna, an input/output module, and an interface. These components may be hardware, software, or a combination of software and hardware.

According to a fifth aspect, a communication apparatus is provided. The communication apparatus may be the first network device and/or the second network device in any one of the first aspect to the third aspect. The communication apparatus has a function of the first network device, a function of the second network device, or functions of the first network device and the second network device. The communication apparatus may be used as a first network device of a first terminal, or may be used as a second network device of a second terminal. The first network device and/or the second network device are/is, for example, a base station, or a baseband apparatus in the base station. In an optional implementation, the communication apparatus includes the baseband apparatus and a radio frequency apparatus. In another optional implementation, the communication apparatus includes a processing unit (sometimes referred to as a processing module) and a transceiver unit (sometimes referred to as a transceiver module).

The processing unit is configured to communicate with a terminal in a first cell by using a first key.

The processing unit is further configured to derive a first key set.

The transceiver unit is configured to send second key information to a network device corresponding to a second cell in a first cell set, where the second key information includes a second candidate key.

Optionally, the transceiver unit is further configured to send first key configuration information to the terminal, where the first key configuration information is used to configure a key corresponding to the first cell set.

In an optional implementation, the processing unit is coupled to a storage unit, and executes a program or instructions in the storage unit, to enable the communication apparatus to execute the function of the first network device and/or the function of the second network device.

In an optional implementation, the communication apparatus includes a processor, configured to: be coupled to a memory, and execute a program or instructions in the memory, to enable the communication apparatus to execute the function of the first network device and/or the function of the second network device.

According to a sixth aspect, a computer-readable storage medium is provided. The computer-readable storage medium is configured to store a computer program or instructions. When the computer program or the instructions are run, the method performed by the terminal device, the first network device, or the second network device in the foregoing aspects is implemented.

According to a seventh aspect, a computer program product including instructions is provided. When the computer program product runs on a computer, the methods in the foregoing aspects are implemented.

According to an eighth aspect, an embodiment of this application further provides a chip system, including a processor, configured to perform the methods in the first aspect to the third aspect and any one of the possible implementation methods in the first aspect to the third aspect.

According to a ninth aspect, a communication system is provided. The communication system includes the terminal in any possible manner of the first aspect and the first network device in any possible manner of the second aspect. Optionally, the communication system further includes the foregoing second network device.

For a technical effect brought by any implementation of the fourth aspect to the ninth aspect, refer to a technical effect brought by the method in any possible design of any one of the foregoing aspects. Details are not described again.

### BRIEF DESCRIPTION OF DRAWINGS

FIG. 1A is a diagram of a network architecture to which an embodiment of this application is applicable;
FIG. 1B is a diagram of an application scenario according to an embodiment of this application;
FIG. 1C is a diagram of another application scenario according to an embodiment of this application;
FIG. 1D is a diagram of still another application scenario according to an embodiment of this application;
FIG. 2 is a diagram of a cell set according to an embodiment of this application;
FIG. 3 is a diagram of a communication method according to an embodiment of this application;
FIG. 4A and FIG. 4B are a diagram of another communication method according to an embodiment of this application;
FIG. 5A and FIG. 5B is a diagram of still another communication method according to an embodiment of this application;
FIG. 6 is a block diagram of a communication apparatus according to an embodiment of this application;
FIG. 7 is a block diagram of a terminal device according to an embodiment of this application; and
FIG. 8 is a block diagram of a network device according to an embodiment of this application.

### DESCRIPTION OF EMBODIMENTS

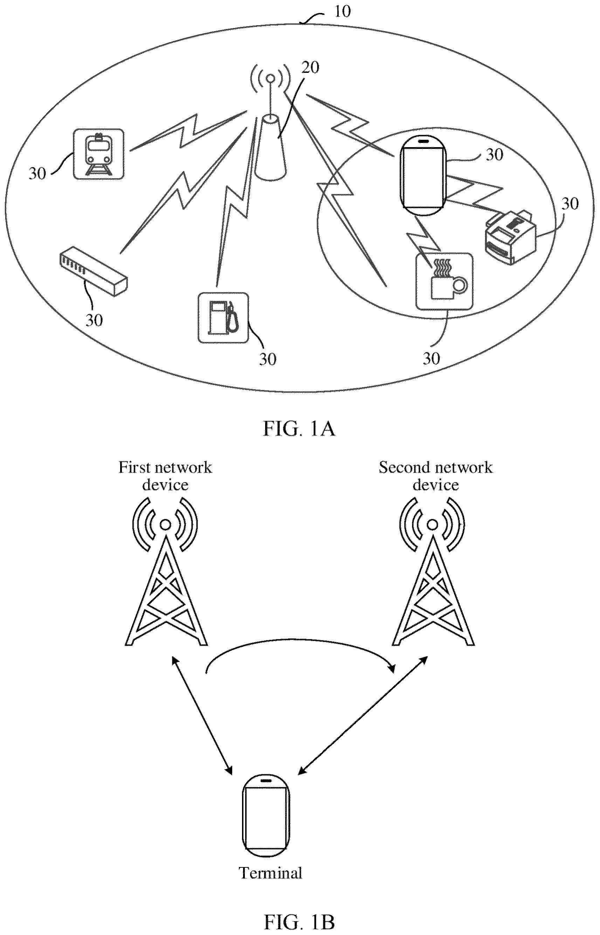

The technologies provided in embodiments of this application may be applied to a communication system 10 shown in FIG. 1A. The communication system 10 includes one or more communication apparatuses 30 (for example, a terminal) connected to one or more core network devices via one or more access network devices 20 (for example, a base station), to implement communication between a plurality of communication devices. The communication system may be, for example, a communication system that supports a 2G, 3G, 4G, or 5G (sometimes referred to as new radio, NR) access technology, a wireless fidelity (wireless fidelity, Wi-Fi) system, a 3rd generation partnership project (3rd generation partnership project, 3GPP) related cellular system, a communication system that supports convergence of a plurality of wireless technologies, or a future-oriented evolved system.

In the following descriptions, some terms in embodiments of this application are described, to help a person skilled in the art have a better understanding.

In this application, the terminal (which may also be referred to as a terminal device) is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing devices. The terminal device is configured to connect persons, objects, machines, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (telemedicine), a smart grid (smart grid), smart furniture, a smart office, a smart wearable, smart transportation, a smart city (smart city), an unmanned aerial vehicle, and a robot. The terminal device may be sometimes referred to as a user equipment (user equipment, UE), a terminal, an access station, a UE station, a remote station, a wireless communication device, a user apparatus, or the like. For ease of description, in this application, an example in which the terminal device is the UE is used for description.

A network device in this application includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in the foregoing communication system, a subsequently evolved base station in 3GPP, an access node in a Wi-Fi system, a wireless relay node, a wireless backhaul node, and the like. The base station may be a macro base station, a micro base station, a pico base station, a small cell, a relay station, or the like. A plurality of base stations may support networks using a same access technology mentioned above, or may support networks using different access technologies mentioned above. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a V2X technology may be a road side unit (road side unit, RSU). The following uses an example in which the access network device is the base station for description. A plurality of network devices in the communication system may be base stations of a same type, or may be base stations of different types. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement a core network function in systems of different access technologies may be different. This is not limited in this application. A 5G system is used as an example. The core network device includes an access and mobility management function (access and mobility management function, AMF), a session management function (session management function, SMF), a user plane function (user plane function, UPF), and the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

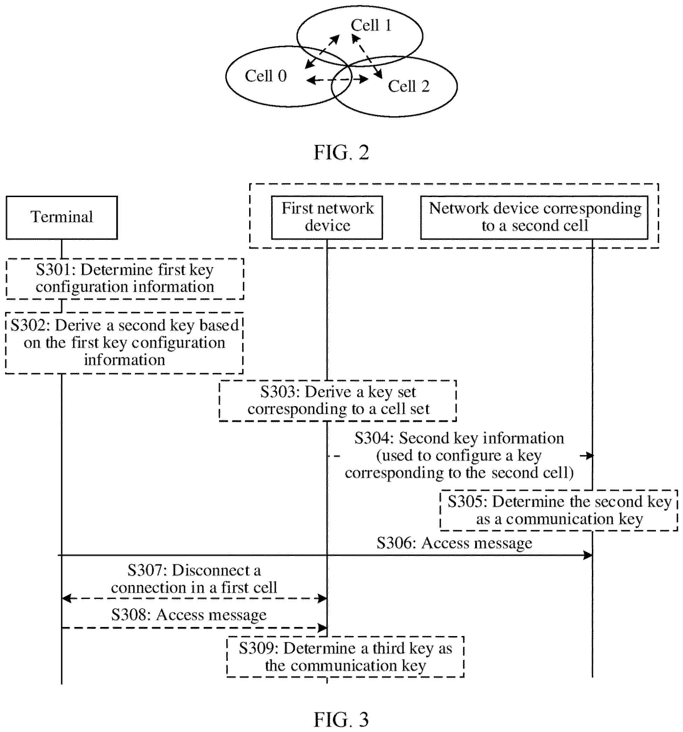

FIG. 1B shows a communication network architecture in the communication system 10 according to this application. All subsequently provided embodiments (for example, an embodiment described in FIG. 3) are applicable to the architecture. A first network device is a source network device (or referred to as a working network device or a serving network device) of the terminal device (using a UE as an example for description subsequently), and a second network device is a target network device (or referred to as a standby network device) of the UE, that is, a network device that provides a service for the UE after handover. It should be noted that in this application, the "handover" means that a cell that provides a service for the UE changes, for example, a new serving cell is added for the UE. The "handover" may be handover caused by a change of the cell that provides the service for the UE. Whether the UE disconnects a connection with a source serving cell is not limited in embodiments of this application. For ease of description, an example in which the network device is the base station is used for description. For example, when the source network device (for example, a base station 1) provides a service for the UE in a source cell (for example, a cell 1), the UE initiates an access request to another cell (for example, a cell 2, which may be referred to as a target cell) in a first cell set, and subsequently, the cell 2 provides a service for the UE. It is easy to understand that the UE may disconnect a connection with the cell 1 before, after, or during accessing the cell 2. Certainly, the UE may alternatively maintain a connection with the cell 1. This is not limited in embodiments of this application.

It may be understood that the source network device, the target network device, the source cell, and the target cell are relative concepts. For example, relative to one UE, at a moment 1, the base station 1 provides a service for the UE in the cell 1, the base station 1 is a source network device of the UE, and the cell 1 is a source cell of the UE; and the UE uses the cell 2 of the base station 2 as a next accessed cell, the base station 2 is a target network device of the UE, and the cell 2 is a target cell of the UE. At a moment 2, the UE 1 disconnects a connection with the cell 1, the base station 2 provides a service for the UE in the cell 2, and the UE uses the cell 1 of the base station 1 as a next accessed cell. In this case, the base station 2 is a source network device of the UE, the cell 2 is a source cell of the UE, the base station 1 is a target network device of the UE, and the cell 1 is a target cell of the UE.

The first network device and the second network device may be two different devices. For example, the first network device and the second network device are two different base stations. Optionally, the first network device and the second network device may alternatively be two sets of functional modules in a same device. The functional module may be a hardware module, or a software module, or a hardware module and a software module. For example, the first network device and the second network device are located in a same base station, and are two different functional modules in the base station.

The first network device and the second network device may be one device. This is not limited in embodiments of this application. In FIG. 3, the first network device and the second network device are located in a dashed box, indicating that the first network device and the second network device may be a same network device or different network devices for the UE. In subsequent descriptions, the first network device, the second network device, and the terminal (using a UE as an example) may be respectively the first network device, the second network device, and the UE in the network architecture shown in FIG. 1B. In the accompanying drawings corresponding to embodiments of this application, steps represented by dashed lines are optional steps, and details are not described below.

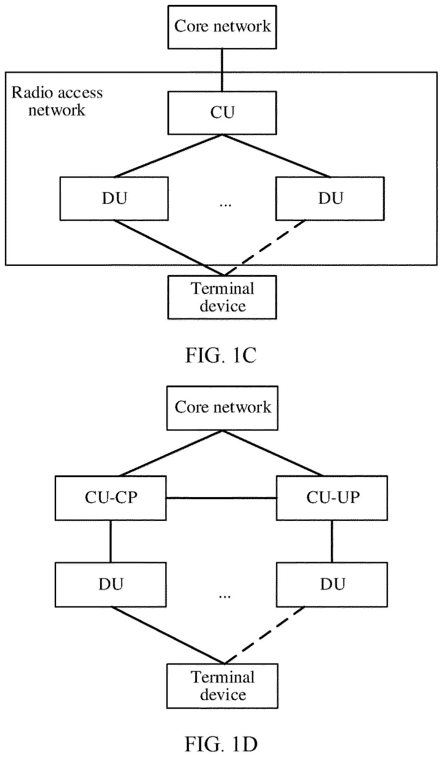

FIG. 1C shows another communication network architecture in the communication system 10 according to this application. As shown in FIG. 1C, the communication system includes a core network (core network, CN) and a radio access network (radio access network, RAN). A network device (for example, a base station) in the RAN includes a baseband apparatus and a radio frequency apparatus. The baseband apparatus may be implemented by one or more nodes. The radio frequency apparatus may be independently implemented remotely from the baseband apparatus, or may be integrated into the baseband apparatus, or a part is placed remotely from the baseband apparatus and a remaining part is integrated into the baseband apparatus. The network device in the RAN may include a central unit (CU) and a distributed unit (DU), and a plurality of DUs may be centrally controlled by one CU. The CU and the DU may be divided based on protocol layer functions of a wireless network that the CU and the DU have. For example, functions of a PDCP layer and a layer above the PDCP layer are set in the CU, and functions of protocol layers below the PDCP layer, such as an RLC layer and a MAC layer, are set in the DU. It should be noted that such protocol layer division is merely an example, and division may be performed at another protocol layer. The radio frequency apparatus may be not placed in the DU but is placed remotely from the DU, or may be integrated into the DU, or a part is placed remotely from the DU and a remaining part is integrated into the DU. This is not limited in this application.

FIG. 1D shows another communication network architecture in the communication system 10 according to this application. In comparison with the architecture shown in FIG. 1C, a control plane (CP) and a user plane (UP) of the CU may be further separated and implemented by using different entities. The entities are respectively a control plane CU entity (CU-CP entity) and a user plane CU entity (CU-UP entity). In the network architecture, signaling generated by the CU may be sent to the UE via the DU, or signaling generated by the UE may be sent to the CU via the DU. The DU may directly transparently transmit the signaling to the UE or the CU by encapsulating the signaling at a protocol layer without parsing the signaling. In the network architecture, the CU is classified as a network device on a RAN side. In addition, the CU may alternatively be classified as a network device on a CN side. This is not limited in this application.

FIG. 2 is a diagram of a cell set according to an embodiment of this application. This embodiment of this application may be applied to a scenario in which a quantity of cell groups (cell groups, CGs) in a cell set (for example, a dynamic cell set) is greater than or equal to 2. The present invention is also applicable to a scenario in which a quantity of CGs in the dynamic cell set is equal to 1. For example, the scenario may be: A master cell of a UE in a CG changes or is handed over when a quantity of cells in the CG is greater than or equal to 2. In this scenario, when the UE hands over between different master cells of a same base station, keys corresponding to the different master cells may change or may remain unchanged, which may be determined by the base station. For example, as shown in FIG. 2, the dynamic cell set includes three CGs, each CG includes one or more cells, and only one cell in each CG is shown in the figure. The UE may maintain a key according to a method provided in embodiments of this application when accessing the cell in the dynamic cell set.

In conventional mobility management, when the UE accesses a cell in a new cell group (to be specific, a cell of a new base station) from a cell in an original cell group (cell group, CG), a handover (handover, HO) procedure needs to be triggered. To be specific, a new cell obtains a context of the UE from an original cell, and then the original cell deletes the context of the UE. However, when the UE re-accesses the original cell, a handover procedure needs to be performed again, so that the cell obtains a context of the UE. This causes a waste of signaling and resources.

For example, the UE or the base station may derive the key in a plurality of manners, for example, horizontal derivation and vertical derivation. The horizontal derivation means that the key (for example, KgNB*) is derived based on a current key (KgNB), and the vertical derivation means that KgNB* is derived based on next hop (next hop, NH) information. In a possible manner, a key derivation manner is determined based on next hop chaining count (next hop chaining count, NCC) information and the NH information. For example, when there is no available {NCC, NH} pair, the horizontal derivation is performed. When there is an available {NCC, NH} pair, the vertical derivation is performed based on an available NH.

In a possible implementation, the NH is also a key (key), and during vertical derivation, new kgNB* is derived based on the NH. The NH is calculated only on a UE side and a core network device side, and the NH on an access network device side is not calculated by the access network device side, but is delivered by a core network device. In addition, the UE, an AMF, and a gNB each have only one piece of NH (which may be understood as that the NH is deleted after use). An air interface does not deliver the NH, but delivers the NCC (for example, carried in a handover command, a radio link control resume message, or a radio link reestablishment message). The NH and the NCC are in pairs. The last three digits of a counter (counter) of the NH are the NCC. Therefore, a value of the NCC ranges from 0 to 7. The NCC is used to implement synchronization between the UE side and a network side. An NH and NCC on a base station side are sent by the core network device to the base station. The core network device and the UE generate same NH and NCC on almost a same occasion by using a same method. It is easy to understand that the foregoing is merely an example of deriving a key by the UE or the network device, and does not constitute a limitation. Another manner may also be used.

To avoid HO procedure frequent triggering when the UE accesses a plurality of cells or cell groups, a dynamic cell set (dynamic cell set, DCS) technology may be used. In the dynamic cell set, each cell or cell group stores the context of the UE. When the UE accesses a new cell, a conventional HO procedure does not need to be performed again to obtain the context of the UE. The UE can dynamically access a plurality of cells/cell groups in the dynamic cell set without triggering the handover procedure.

A dynamic cell set mechanism may be understood as that only one CG in one or more CGs in the dynamic cell set is activated, and master and secondary CGs are not distinguished. Activation indicates that the UE camps on the CG and the CG provides a service. The master and secondary CGs are not distinguished. For example, in the DCS, a master cell group (master cell group, MCG) or a secondary cell group (secondary cell group, SCG) may not be distinguished as in dual connectivity (dual connectivity, DC), and all CGs are MCGs. There is at least a control plane connection between each CG and the core network device, and there may be further a user plane connection between each CG and the core network device. A plurality of CGs may belong to a same base station or different base stations. One CG may belong to one base station or a plurality of base stations. Generally, a plurality of CGs belong to different base stations, and one CG belongs to one base station.

How to maintain a key in the dynamic cell set to ensure consistency between a key on the UE side and a key on the network device side when the UE accesses the dynamic cell set is an urgent problem to be resolved.

In this application, a quantity of nouns, unless otherwise specified, means "singular nouns or plural nouns", that is, "one or more". "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. For example, A/B indicates A or B. One or more of the following after "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of obj ects. For example, first key configuration information and second key configuration information may be same configuration information, or may be different configuration information. In addition, the names do not indicate that the two pieces of configuration information have different information amounts, content, priorities, importance degrees, or the like.

To describe the technical solutions in this application more clearly and completely, the following describes some embodiments of this application with reference to the accompanying drawings.

FIG. 3 shows a communication method 300 according to an embodiment of this application.

S301: A terminal communicates with a first network device in a first cell of the first network device by using a first key.

The terminal determines first key configuration information, where the first key configuration information is used to configure a key corresponding to a first cell set.

In a possible manner, the first network device sends the first key configuration information to the terminal, where the first key configuration information is used to configure the key corresponding to the first cell set.

The first cell set is a cell set corresponding to the terminal. For example, the first cell set is a dynamic cell set of the terminal.

Correspondingly, the terminal receives the first key configuration information from the first network device.

In another possible manner, the first key configuration information is predefined or preconfigured. For example, a protocol may specify that the terminal derives a new key based on a historical key of each cell and performs horizontal derivation. In this case, the first network device does not need to send the first key configuration information to the terminal.

The first key configuration information includes one or more of NCC information, first derivation configuration information, first derivation indication information, and first input parameter indication information.

For example, the first key configuration information includes one or more of the first derivation configuration information, the first derivation indication information, and the first input parameter indication information.

The first derivation configuration information indicates to perform derivation based on a first specified key, to be specific, indicates the terminal to derive a new key based on the first specified key. The first specified key includes the first key, a latest historical key in one or more historical keys corresponding to a target cell (for example, a second cell) of the terminal in the first cell set, or a key corresponding to an original cell. Optionally, which historical key is the latest historical key is determined based on a quantity of access times of the terminal. The first derivation configuration information may indicate the terminal to derive a new key based on a key corresponding to a current cell of the terminal or the historical key corresponding to the target cell of the terminal in the first cell set.

The first derivation indication information indicates a derivation manner, and the derivation manner includes horizontal derivation or vertical derivation. In a possible implementation, that the first derivation indication information indicates the terminal to determine, in a horizontal derivation manner, a key for accessing a cell in the first cell set may be understood as that the first derivation indication information indicates the terminal to subsequently use only the horizontal derivation manner.

The first input parameter indication information indicates to use the quantity of access times of the terminal as an input parameter for deriving a key. The quantity of access times includes a quantity of access times of accessing a specific cell. For example, the quantity of access times includes a quantity of times of accessing the second cell by the terminal. Optionally, the quantity of access times includes a quantity of times of accessing the cell in the first cell set by the terminal, and/or a quantity of times of accessing the cell in the first cell set and a quantity of times of accessing a cell not in the first cell set by the terminal. It is easy to understand that the first input parameter indication information may also be referred to as first derivation input parameter indication information. The specific cell may be a source cell or the target cell.

Optionally, the method 300 may further include the following steps. The first network device determines the first cell set, where determining the first cell set includes: obtaining the first cell set, or updating the first cell set.

Optionally, the first cell set includes the first cell, or the first cell set does not include the first cell. This is not limited. It is easy to understand that an occasion for the first network device to determine the first cell set is not limited in this embodiment of this application. For example, that the first network device determines the first cell set includes: The first network device adds another cell as the cell in the first cell set. Optionally, that the first network device determines the first cell set includes: The first network device receives the first cell set sent by another network device.

S302: The terminal determines a second key, where the second key is a key for communication with a network device corresponding to the second cell in the first cell set.

In a possible manner, determining the second key includes: determining the second key based on the first key configuration information.

Optionally, the first key configuration information is predefined or preconfigured.

It may be understood as that the first key configuration information is used by the terminal to determine a key, and the key includes a key used by the terminal to communicate with a network device in one or more cells in the first cell set.

In a possible implementation, that the terminal determines the second key based on the first key configuration information may be replaced with: The terminal determines the second key based on one or more of the first specified key, some or all information of the first key configuration information, cell information, information about the quantity of access times, and next hop information.

In a possible implementation, the terminal determines the second key based on the first key configuration information and cell information corresponding to the second cell. The cell information includes one or more of downlink frequency information and physical cell identifier information.

For example, when the first specified key is the first key, the terminal determines the second key based on the first key. It may also be referred to as deriving the second key based on the first key. In other words, when the second key is derived, the first key is used as one of input parameters. It is easy to understand that there may be other input parameters, for example, the cell information and the quantity of access times. This is not limited in this application.

For another example, when the first specified key is the key corresponding to the original cell, the terminal determines the second key based on the key corresponding to the original cell. In other words, when the second key is derived, the key corresponding to the original cell is used as one of input parameters.

For another example, when the first specified key is the latest historical key in the one or more historical keys corresponding to the second cell, the terminal determines the second key based on the latest historical key corresponding to the second cell. In other words, the latest historical key is used as one of input parameters for deriving the second key. Optionally, the terminal may determine the latest historical key in a plurality of manners. For example, the terminal determines the latest historical key based on the quantity of access times of the terminal, or determines the latest historical key based on time information corresponding to the historical key, or the terminal marks the latest historical key. This is not limited in this application.

Optionally, the second cell is the target cell. In other words, the second cell is a target access cell of the terminal.

In step S302, there are a plurality of possible implementations in which the terminal derives the second key based on the first key configuration information. For example, a first manner in which the UE determines a communication key is as follows:

The UE derives the second key based on key configuration information.

In a possible manner, a serving cell base station of the UE sends a derived key to another cell in the dynamic cell set, and sends dynamic cell set configuration information including the key configuration information to the UE, or the key configuration information is predefined. The UE derives, based on a key configuration, the second key for communication with the target cell. In other words, the UE dynamically derives the second key based on the key configuration information. In a possible implementation, each time the UE accesses a cell, the UE re-obtains the key configuration information. Optionally, in the dynamic cell set, when the UE accesses a new cell, the UE derives a communication key in a current cell based on a communication key in a previous cell.

A second manner in which the UE determines a communication key is as follows:

The UE derives a new key used in a current cell based on a key used in an original cell or a historical key of the current cell. The original cell is a cell that determines the first cell set. To be specific, a network device corresponding to the original cell adds another cell as the cell in the first cell set. It is easy to understand that the UE stores the key used in the original cell, and stores historical keys of a part or all of cells in the first cell set.

Optionally, the method 300 further includes step S303: The first network device derives a first key set.

In a possible manner, that the first network device derives a first key set includes: deriving the first key set based on one or more of the first key, the next hop information, and information about the cell in the first cell set, where the cell information includes one or more of the downlink frequency information and the physical cell identifier information.

For example, the first key set includes Q keys, there is a correspondence between the Q keys and N cells in the first cell set, the N cells are cells of M network devices, the first cell set corresponds to the terminal, and Q, N, and M are integers greater than or equal to 1. In a possible implementation, Q and N are integers greater than or equal to 2.

For example, the Q keys are in one-to-one correspondence with the N cells, that is, Q=N.

For another example, the Q keys correspond to the N cells, and Q is greater than N. In this embodiment of this application, that a key corresponds to a cell may be understood as that the key is a key of a corresponding cell, and has a mapping relationship with the cell. For example, when the key is derived, cell information of the cell corresponding to the key is used as one of derivation parameters.

Optionally, when deriving the first key set, the first network device uses the quantity of access times as an input parameter for deriving the key.

Optionally, the first network device stores the first key, and after disconnecting a connection with the terminal in the first cell, the first network device uses the first key as the historical key corresponding to the first cell.

It is easy to understand that a sequence of performing step S301 and step S303 or step S304 is not limited in this embodiment of this application. For example, S301 is performed after S303 or S304.

S304: The first network device sends second key information to the network device (briefly referred to as a second network device below) corresponding to the second cell in the first cell set, where the second key information is used to configure a key corresponding to the second cell. Optionally, the second key information includes a second candidate key.

Correspondingly, the second network device receives the second key information. It is easy to understand that the second network device and the first network device may be a same network device or different network devices. This is not limited in this application.

Step S304 may be understood as that the first network device distributes a key in the first key set to one or more network devices corresponding to the first cell set.

It is easy to understand that step S304 is an optional step. For example, when the first network device is a network device that adds or updates the first cell set, step S304 may be performed. For another example, when the first network device is not a network device that adds or updates the first cell set, the first network device may not perform step S304.

It is easy to understand that a sequence of performing step S304 is not limited in this embodiment of this application. For example, step S304 may be performed when the first key set is derived, or may be performed after the first key set is derived.

S305: The second network device determines the second key, where the second key is a key for communication between the second network device and the terminal in the second cell.

For example, the second network device determines that a communication key is the second key based on one or more of the second key information, terminal-related information, first cell set-related information, information about the quantity of access times of the terminal, and information about a historical key corresponding to the second cell.

The terminal-related information includes identification information of the terminal, the information about the quantity of access times of the terminal, or the like. The first cell set-related information includes NCC information corresponding to the second network device, cell identifier information, and the like. The information about the historical key includes information about the historical key corresponding to the cell in the first cell set, for example, the historical key corresponding to the second cell.

For example, the second network device determines the second key based on one or more of the second key information, a latest historical key in one or more historical keys corresponding to the second cell, and the quantity of access times, where the historical key includes a historical key between the terminal and the second cell.

For another example, when accessing the second cell for a first time, the terminal uses the second candidate key as the second key.

For another example, when accessing the second cell not for a first time, the terminal determines the second key based on the latest historical key in the one or more historical keys corresponding to the second cell.

In step S305, there are a plurality of possible implementations in which the second network device determines a key for communication with the terminal in the second cell. For example:

A first manner in which the second network device determines the communication key is as follows:

A network device (for example, the second network device corresponding to the second cell) corresponding to a current cell may receive a derived key sent by a network device corresponding to a previous cell (for example, the first cell), use the derived key as a communication key with the UE, and in addition, derive a key of another cell in the first cell set and send the key to a network device of a corresponding cell.

A second manner in which the second network device determines the communication key is as follows:

The second network device communicates with the UE in the corresponding second cell by using a received new key of the second cell or a new key that is of the second cell and that is derived based on the historical key of the second cell. Optionally, the received key is a key that is received by the network device corresponding to the second cell and that is sent by the network device corresponding to the original cell.

S306: The terminal sends an access message to the second network device.

Correspondingly, the second network device receives the access message. Optionally, the access message indicates to access the second cell. In a possible manner, the access message includes a preamble. In another possible manner, the access message indicates the second network device that the terminal accesses the second cell.

Step S306 may be understood as that the second network device communicates with the terminal in the second cell by using the second key.

It is easy to understand that step S306 may be performed before step S302 or after step S302. To be specific, the terminal may determine the second key after initiating access to the second cell, or before initiating an access process. Similarly, step S306 may be performed before, during, or after steps S303 to S305.

Optionally, the method 300 further includes: The terminal stores the second key, and after disconnecting a connection with the second cell, uses the second key as the historical key corresponding to the second cell.

Optionally, the method 300 further includes: The second network device stores the second key, and after disconnecting the connection with the terminal in the second cell, uses the second key as the historical key corresponding to the second cell.

Optionally, the method 300 further includes step 307: The first network device disconnects the connection with the terminal in the first cell. It is easy to understand that an occasion for disconnecting the connection with the first cell is not limited in this application. For example, the connection with the first cell may be disconnected after an access request is initiated to the second cell.

For example, the method 300 further includes step 308: The terminal initiates, to the first network device, a request message for accessing the first cell. Correspondingly, the first network device receives the access message from the terminal, where the access message indicates to access the first cell. It may be easily understood as that the terminal re-accesses the first cell.

The method 300 further includes step 309: Determine a third key, where the third key is a key for communication with the terminal in the first cell.

For example, the first network device determines the third key based on the latest historical key in the one or more historical keys corresponding to the first cell.

For another example, at least one key that is corresponding to the first cell and that is sent by at least one of the M network devices in the first cell set is received; and the third key is determined based on a latest key in the at least one key.

It is easy to understand that for a manner in which the first network device determines the third key, refer to the manner in which the second network device determines the second key in step S305.

In the method, the first network device distributes key information to another network device in the cell set, or a network device in the cell set derives a new key based on a historical key, or the first network device sends key configuration information to the terminal or the protocol preconfigures key configuration information, so that when the terminal accesses a cell in the cell set, the terminal and a network device corresponding to a target access cell obtain the communication key in time. This ensures information security between the terminal and the network device. In a possible implementation, when the terminal accesses the cell in the cell set, signaling interaction is reduced, and a delay is reduced.

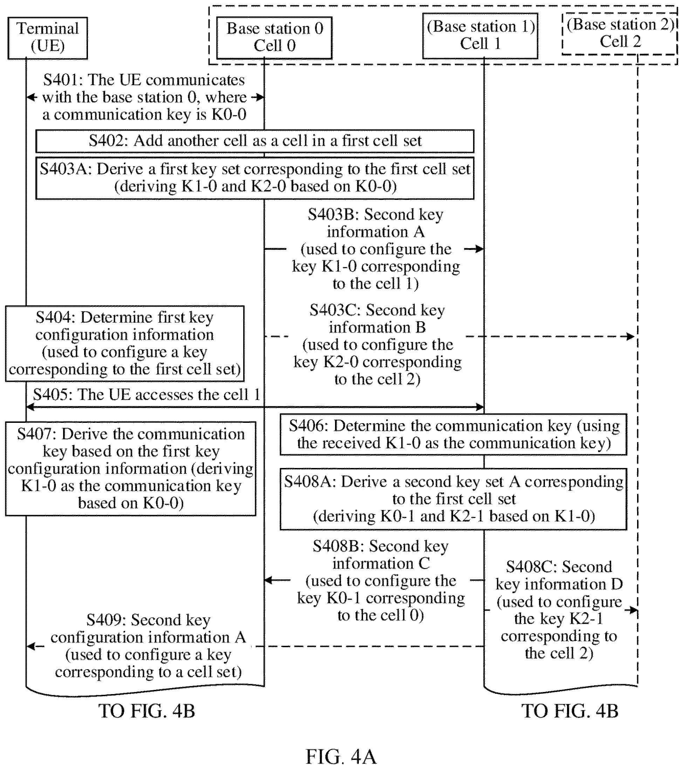

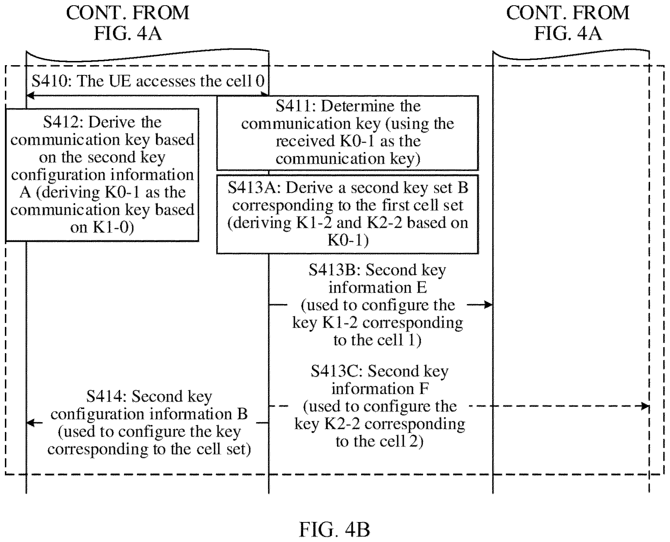

Based on the solution in FIG. 3, FIG. 4A, FIG. 4B, FIG. 5A, and FIG. 5B respectively provide detailed examples of the communication method. Next, FIG. 4A and FIG. 4B are a schematic flowchart of a communication method according to an embodiment of this application.

S401: A terminal communicates with a first network device (in this embodiment, an example in which the first network device is a base station 0 is used) in a cell 0, where a communication key is K0-0 (the key K0-0 is used as an example for description). That is, security protection of data and/or signaling is performed based on the key K0-0. The security protection includes encryption and/or integrity protection.

S402: The base station 0 adds another cell as a cell in a first cell set.

To be specific, the base station 0 determines to add a cell 1 of a base station 1 and/or a cell 2 of a base station 2 as the cell of the terminal in the first cell set. The following uses an example in which the first cell set is a dynamic cell set for description. In this embodiment of this application, an example in which the cell 0 is a cell in the dynamic cell set is used. It is easy to understand that the cell 0 may alternatively not be a cell in the dynamic cell set.

S403: The base station 0 distributes a key to a network device corresponding to the first cell set.

For example, S403 includes S403A, S403B, and/or S403C.

S403A: The base station 0 derives a first key set corresponding to the first cell set.

The first key set includes Q keys, there is a correspondence between the Q keys and N cells in the first cell set, the N cells are cells of M network devices, the first cell set corresponds to the terminal, and Q, N, and M are integers greater than or equal to 1. In a possible implementation, Q and N are integers greater than or equal to 2.

For example, the first key set includes keys K1-0 and K2-0, K1-0 is a key corresponding to the cell 1, and K2-0 is a key corresponding to the cell 2.

The base station 0 derives the first key set in a plurality of possible manners.

In a possible implementation, the base station 0 derives the first key set based on one or more of a current communication key (for example, K0-0), an NH, or related information of the cell in the first cell set.

For example, the base station 0 derives K1-0 and K2-0 based on K0-0.

For another example, the base station 0 derives K1-0 based on the key information K0-0 between a UE and the base station 0 and information about the cell 1 of the base station 1, and the base station 0 derives K2-0 based on the key K0-0 between the UE and the base station 0 and information about the cell 2 of the base station 2.

Optionally, when the first key set is derived, a quantity of access times of the terminal is used as an input parameter for deriving a new key. The quantity of times of accessing a cell includes a quantity of times of accessing a target cell in the dynamic cell set, and/or a quantity of times of accessing a cell (regardless of whether a current target cell is accessed, a quantity of times of accessing another cell is also counted). The target cell may be understood as a specific cell (for example, a cell to be accessed), a type of cell (for example, whether the cell belongs to the dynamic cell set), or a predefined cell.

S403B: The base station 0 sends second key information A to the base station 1, where the second key information A is used to configure the key corresponding to the cell 1.

Correspondingly, the base station 1 receives the second key information A from the base station 0.

Optionally, the second key information includes a second candidate key A, and the first key set includes the second candidate key A.

Optionally, the second key information A further includes NCC information.

Optionally, the base station 1 sends, to the base station 0, a message (which may also be referred to as a reception confirmation message) in response to the second key information A. For example, the reception confirmation message includes the NCC information and/or reception confirmation information.

Optionally, S403C: The base station 0 sends second key information B to the base station 2, where the second key information B is used to configure the key corresponding to the cell 2.

Correspondingly, the base station 1 receives the second key information B from the base station 0.

For related descriptions of the second key information B, refer to related descriptions of the second key information A in S403B. A difference lies in that the second key information B corresponds to the cell 2.

For example, the base station 0 determines, based on whether there is an unused {NH, NCC} pair, a manner of deriving KgNB*, for example, horizontal derivation or vertical derivation. In a possible implementation, when there is no available {NCC, NH} pair, the horizontal derivation is used. When there is an available {NCC, NH} pair, the vertical derivation is performed based on an available NH. Input parameters for horizontally deriving a new key include: an original key (a key currently used by the base station 0), downlink frequency information of the target cell, and physical cell identifier (physical cell identifier, PCI) information of the target cell. Input parameters for vertically deriving a new key include: the NH, the downlink frequency information of the target cell, and the PCI information of the target cell. Then, a newly generated {KgNB*, NCC} pair is sent to a target base station, and is returned to the base station 0 after being confirmed by the target base station. For example, KgNB* to the base station 1 is K1-0, and KgNB* to the base station 2 is K2-0. The base station 1 and the base station 2 receive a {K1-0, NCC 1} pair and a {K2-0, NCC 2} pair from the base station 0. The base station 1 sends NCC 1 and/or the reception confirmation information to the base station 0. The base station 2 sends NCC 2 and/or the reception confirmation information (which may also be referred to as response information) to the base station 0. The NCC 1 and the NCC 2 may or may not be equal. This is not limited herein. In this embodiment of this application, KgNB* may be understood as a temporary key.

In another possible implementation, there is no sequence between step S403B and step S403C. To be specific, the second key information A and the second key information B are sent in no sequence, and may be sent at the same time, or the second key information B may be sent before the first key.

In another possible implementation, step S403A, step S403B, and step S403C may be performed at the same time. To be specific, one key is sent when one key is derived, and keys are sent without waiting until two keys are derived. For example, K1-0 is derived and sent to the base station 1, and then K2-0 is derived and sent to the base station 2; or K2-0 is derived and sent to the base station 2, and then K1-0 is derived and sent to the base station 1.

In another possible implementation, step S403 and step S402 may be performed at the same time. To be specific, the base station 0 adds a cell to the dynamic cell set and sends a key to a corresponding cell at the same time, instead of only sending the key after adding the cell to the dynamic cell set.

In another possible implementation, in S403A, when K1-0 is derived, the vertical derivation may be used, to be specific, the base station 0 derives K1-0 based on the NH (instead of K0-0) and information about the cell 1 of the base station 1; and/or when K2-0 is derived, the vertical derivation may be used, to be specific, the base station 0 derives K2-0 based on the NH (instead of K0-0) and information about the cell 2 of the base station 2.

S404: The base station 0 sends first key configuration information to the terminal, where the first key configuration information is used to configure a key corresponding to the dynamic cell set.

It is easy to understand that step S404 is an optional step. For example, the first key configuration information may be predefined. For example, a protocol specifies that the horizontal derivation is used for key derivation of the dynamic cell set. In this case, the first key configuration information does not need to be sent.

In a possible manner, dynamic cell set configuration information includes the first key configuration information, where the dynamic cell set configuration information is used to configure the dynamic cell set. For example, the dynamic cell set configuration information includes dynamic cell set-related information, for example, cell identifier information in the dynamic cell set.

The first key configuration information includes one or more of the NCC information, first derivation configuration information, first derivation indication information, and first input parameter indication information.

The NCC information includes NCC information corresponding to the target base station, for example, the NCC 1 and the NCC 2 corresponding to the base station 1 and the base station 2.

Optionally, the first key derivation configuration information indicates the terminal to perform derivation based on a first specified key. For example, the first specified key includes a key corresponding to a current cell of the terminal, a historical key corresponding to the target cell of the terminal in the dynamic cell set, or a key corresponding to an original cell, and the historical key is related to a quantity of times of accessing the target cell by the terminal. That is, the first key derivation configuration information indicates the terminal whether to perform further derivation based on a key of a new cell or perform derivation based on a key of each cell.

Optionally, the first derivation indication information indicates the terminal whether to determine, in a horizontal derivation manner, a key for accessing the cell in the first cell set (which may be understood as whether the terminal subsequently uses only the horizontal derivation). In a possible implementation, if only the horizontal derivation is used, a base station does not need to deliver the NCC to the terminal. Using only the horizontal derivation subsequently means that the terminal uses only the horizontal derivation in a current key derivation process and a subsequent key derivation process.

Optionally, the first input parameter indication information indicates whether to use the quantity of access times of the terminal as the input parameter for deriving the new key.

In another possible implementation, step S404 and step S402 and step S403 may be performed at the same time. To be specific, the base station 0 adds the cell to the dynamic cell set, sends the key, and sends a dynamic cell set configuration to the terminal (for example, the UE) at the same time.

In another possible implementation, step S401 to step S404 are replaced. A base station where the UE is currently located is a base station-1, and the UE has not accessed the base station 0. In a process in which the UE hands over to the base station 0, the base station 0 determines the dynamic cell set and sends the dynamic cell set configuration information to the base station-1, and the base station-1 sends the dynamic cell set configuration information to the UE. In a process or after a process in which the base station 0 determines the dynamic cell set, step S403 is performed.

In another possible implementation, step S401 to step S404 are replaced. The UE just completes handover from the base station-1 to the base station 0, and the base station 0 determines the dynamic cell set and sends the dynamic cell set configuration information to the UE. In the process or after the process in which the base station 0 determines the dynamic cell set, step S403 is performed.

S405: The UE accesses the cell 1.

For example, the UE sends an access message to the base station 1.

Optionally, the UE disconnects a connection with the cell 0. An occasion for disconnecting the connection by the UE is not limited. For example, the UE may disconnect the connection with the cell 0 before or after accessing the cell 1, or in a process of accessing the cell 1. Certainly, the UE may alternatively not disconnect the connection with the cell 0. This is not limited.

S406: The base station 1 determines the communication key.

In a possible manner, the base station 1 uses the received K1-0 as a key for communication with the UE in the cell 1.

In another possible implementation, there is no definite sequence between step S406 and step S405, and step S406 and step S405 may be performed at the same time, or step S406 may be performed before or after step S405. For example, it is not that the base station 1 uses the key after the UE completes access. Instead, in an access process, the base station 1 uses the received K1-0 as the key for communication with the UE.

In another possible implementation, step S406 and step S403 to step S405 may be performed at the same time. For example, the base station 0 is currently adding a cell to the dynamic cell set, and derives a key and sends the key to the base station 1. After obtaining a response from the base station 1, the base station 0 sends the NCC to the UE by using the dynamic cell set configuration information. At the same time, the UE performs handover. In a handover procedure, the base station 1 uses K1-0 as the key for communication with the UE.

S407: The UE determines the communication key. Determining the communication key may be understood as deriving the communication key.

In a possible implementation, that the UE determines the communication key includes: The UE determines the communication key based on the first key configuration information.

In another possible manner, the UE determines the communication key in a predefined or preconfigured manner. It may be understood as that the first key configuration information is predefined or preconfigured.

In other words, the communication key is derived based on the first key configuration information. For example, the UE derives K1-0 based on K0-0 and uses K1-0 as the key for communication with the base station 1 in the cell 1.

In a possible manner in which the terminal determines the communication key based on the first key configuration information, the terminal determines a second key based on some or all information of the first key configuration information, a first key, and/or cell information corresponding to the cell 1. It may be understood as that the terminal determines, based on a key corresponding to a current cell, a key corresponding to the target cell. Optionally, the first specified key is the first key or referred to as the key corresponding to the current cell.

The cell information includes one or more of downlink frequency information and physical cell identifier information. For related descriptions of the first key configuration information and the first specified key, refer to related descriptions in step S404.

Optionally, when deriving the communication key, the UE uses a quantity of access times of the UE as the input parameter for deriving the new key. It is easy to understand that the UE may determine, based on the first derivation parameter indication information, to use the quantity of access times of the UE as the input parameter. In another possible implementation, when there is no first derivation parameter indication information, the UE may autonomously determine or determine, according to a predefined rule, whether to use the quantity of access times of the UE as the input parameter.

For example, the UE compares whether received NCC is equal to NCC associated with current KgNB (that is, K0-0). If the received NCC is equal to the NCC associated with current KgNB, the UE horizontally derives KgNB* based on current KgNB. If the received NCC is not equal to the NCC associated with current KgNB, the UE vertically derives KgNB* (to be specific, the UE first synchronizes the NH until local NCC is equal to the received NCC, and the UE vertically derives KgNB* based on the NH existed when the local NCC and the received NCC are equal). Input parameters for the horizontal derivation and the vertical derivation by the UE are the same as those for the horizontal derivation and the vertical derivation by the base station 0 in step S403, and key derivation results are also the same. KgNB* is the derived key K1-0. The UE uses the key as the communication key with the base station 1.

In another possible implementation, there is no definite sequence between step S407 and step S406, and step S407 and step S406 may be performed at the same time, or step S407 may be performed before or after step S406. For example, the UE first derives the key K1-0 and uses the key K1-0 as the communication key with the base station 1, and then the base station 1 confirms K1-0 as the communication key with the UE.

In another possible implementation, step S407 and step S403 to step S406 may be performed at the same time. An example is shown in step S406. Details are not described herein again.

In another possible implementation, if the first derivation indication information in step S404 indicates the UE to subsequently use only the horizontal derivation, or the protocol specifies that the UE subsequently uses only the horizontal derivation, the UE may omit determining whether to use the horizontal derivation or the vertical derivation.

In another possible implementation, if the key derivation input parameter indication information in step S404 indicates that the quantity of access times of the UE is used as the input parameter for deriving the new key, or the protocol specifies that the quantity of access times of the UE is used as the input parameter for deriving the new key, when the UE derives the new key, in addition to the downlink frequency information of the target cell and the PCI information of the target cell, information about the quantity of access times needs also to be added. It is easy to understand that an input parameter other than the information about the quantity of access times is not limited in this embodiment of this application. For example, some input parameters may be added, replaced, or deleted. For example, the downlink frequency information of the target cell is not used as the input parameter.

S408: The base station 1 distributes a key to the network device corresponding to the first cell set.

For example, S408 includes S408A, S408B, and/or S408C.

S408A: The base station 1 derives a second key set A corresponding to the first cell set.

For descriptions of the second key set A, refer to related descriptions in step S403A. A difference lies in that the second key set A is derived by the base station 1.

For example, the second key set A includes keys K0-1 and K2-1, K0-1 is a key corresponding to the cell 0, and K2-1 is the key corresponding to the cell 2.

For example, the base station 1 derives K0-1 and K2-1 based on K1-0.

For another example, the base station 1 derives K0-1 based on the key information K1-0 between the UE and the base station 1 and information about the cell 0 of the base station 0, and the base station 1 derives K2-1 based on the key K1-0 between the UE and the base station 1 and the information about the cell 2 of the base station 2.

Optionally, when the second key set A is derived, the quantity of access times of the terminal is used as the input parameter for deriving the new key.

It is easy to understand that for a manner in which the base station 1 derives the second key set A, refer to descriptions of deriving the first key set by the base station 0 in S403. Details are not described again.

S408B: The base station 1 sends second key information C to the base station 0, where the second key information C is used to configure the key corresponding to the cell 0.

Correspondingly, the base station 0 receives the second key information C from the base station 1.

Optionally, the second key information includes a second candidate key C, and the second key set A includes the second candidate key C.

Optionally, the second key information C further includes the NCC information.

Optionally, the base station 0 sends, to the base station 1, a message in response to the second key information C. For example, reception confirmation message includes the NCC information and/or reception confirmation information.

Optionally, S408C: The base station 1 sends second key information D to the base station 2, where the second key information D is used to configure the key corresponding to the cell 2.

Correspondingly, the base station 2 receives the second key information D from the base station 1.

For S408C, refer to related descriptions of S408B. For example, for related descriptions of the second key information D, refer to related descriptions of the second key information C in S408B. A difference lies in that the second key information D corresponds to the cell 2.

For descriptions of an execution sequence of S408A to S408C, refer to descriptions of an execution sequence of S403A to S403C.

In another possible implementation, step S408 and step S405 to step S407 may be performed at the same time. For example, K0-1 and K2-1 are derived without a need of waiting until the UE completely accesses the cell 1. In an access process of the UE, the base station 1 may determine the communication key, derive the new key based on the determined communication key, and send the new key to a corresponding cell at the same time. The base station 1 derives the new key and sends the new key to the corresponding cell without waiting until step S405 to step S407 are completed and secure communication can be performed.

S409: The base station 1 sends second key configuration information A to the terminal, where the second key configuration information A is used to configure the key corresponding to the dynamic cell set. It is easy to understand that step S409 is an optional step.

For related descriptions of the second key configuration information A, refer to related descriptions of the first key configuration information in S404. Details are not described again in this embodiment of this application.

For example, the second key configuration information A includes one or more of the NCC information, second derivation configuration information, second derivation indication information, and second input parameter indication information.

The NCC information includes the NCC information corresponding to the target base station, for example, the NCC 1 and the NCC 2 corresponding to the base station 1 and the base station 2.

Optionally, the second key derivation configuration information indicates the terminal to perform derivation based on a second specified key. For example, the second specified key includes the key corresponding to the current cell of the terminal or the historical key corresponding to the target cell of the terminal in the dynamic cell set, and the historical key is related to the quantity of times of accessing the target cell by the terminal. That is, the second key derivation configuration information indicates the terminal whether to perform further derivation based on the key of the new cell or perform derivation based on the key of each cell.

Optionally, the second derivation indication information indicates the terminal whether to subsequently use only the horizontal derivation. In a possible implementation, if only the horizontal derivation is used, the base station does not need to deliver the NCC to the terminal. Using only the horizontal derivation subsequently means that the terminal uses only the horizontal derivation in the current key derivation process and the subsequent key derivation process.

Optionally, the second input parameter indication information indicates whether to use the quantity of access times of the terminal as the input parameter for deriving the new key.

In another possible implementation, step S409 and step S408 may be performed at the same time. For example, the base station 1 derives and sends the key, and sends key information of the target base station, the base station 0, and/or the base station 2 to the UE at the same time.

In another possible implementation, when horizontal derivation indication information in step S404 determines that the UE subsequently uses only the horizontal derivation, or the protocol specifies that the UE subsequently uses only the horizontal derivation, step S409 is an optional step, and the NCC information may not be sent to the UE.

S410: The UE accesses the cell 0.

It is easy to understand that a sequence in which the UE accesses the cell is not limited in this embodiment of this application, and S410 is merely an example. That the UE accesses the cell 0 may be understood as that the UE disconnects a connection with the cell 0 before accessing the cell 0. For example, the UE disconnects the connection with the cell 0 after step S405.

S411: The base station 0 determines the communication key.

In a possible manner, the base station 0 uses the received K0-1 as a key for communication with the UE in the cell 0.

In another possible implementation, there is no definite sequence between step S411 and step S410. For specific implementation, refer to similar descriptions in step S406.

In another possible implementation, step S411 and step S48 to step S410 may be performed at the same time. For example, the base station 1 derives and sends the key, and sends key information returned by the target base station to the UE at the same time. At the same time, the UE accesses another cell in the dynamic cell set, and the base station 0 uses a received key as the communication key with the UE.

S412: The UE determines the communication key based on the second key configuration information A. Determining the communication key may be understood as deriving the communication key.

In other words, the communication key is derived based on the second key configuration information A. For example, the UE derives K0-1 based on K1-0 and uses K0-1 as the key for communication with the base station 0 in the cell 0.

For a manner in which the UE determines the communication key, refer to related descriptions of step S407. A difference lies in that in step S412, the UE accesses the cell 0 in the dynamic cell set for a second time (which is merely an example), and the UE uses key configuration information of the target base station that is actively pushed by the base station 1 in step S409. It is easy to understand that if the base station 1 does not actively push the key configuration information of the target base station, the terminal may continue to use configuration information related to 404.

S413: The base station 0 distributes the key to the network device corresponding to the first cell set.

For example, S413 includes S413A, S413B, and/or S413C.

S413A: The base station 0 derives a second key set B corresponding to the first cell set.

For example, the base station 0 derives K1-2 and K2-2 based on K0-1.

For another example, the base station 0 derives K1-2 based on the key information K0-1 between the UE and the base station 0 and the information about the cell 1 of the base station 1, and the base station 0 derives K2-2 based on the key K0-1 between the UE and the base station 0 and information about the cell 2 of the base station 2.

S413B: The base station 0 sends second key information E to the base station 1, where the second key information E is used to configure the key corresponding to the cell 1.

Correspondingly, the base station 1 receives the second key information E from the base station 0.

S413C: The base station 0 sends second key information F to the base station 2, where the second key information F is used to configure the key corresponding to the cell 2.

Correspondingly, the base station 2 receives the second key information F from the base station 0.

For related descriptions of step S413, refer to similar descriptions in step S403 or step S408. Details are not described herein again.

S414: The base station 0 sends second key configuration information B to the terminal, where the second key configuration information B is used to configure the key corresponding to the dynamic cell set. It is easy to understand that step S414 is an optional step.

For related descriptions of step S414, refer to similar descriptions in step S404 or step S409. Details are not described herein again.

It is easy to understand that step S410 to step S414 are examples of a method for re-accessing the cell in the dynamic cell set by the UE, that is, step S410 to step S414 are optional steps.

Unless otherwise specified, in this embodiment of this application, information (for example, the first key configuration information) sent by the network device to the terminal may be carried in a message, such as a radio resource control (radio resource control, RRC) message, a media access control (media access control, MAC) control element (control element, CE), or downlink control information (downlink control information, DCI), and is sent to the terminal.

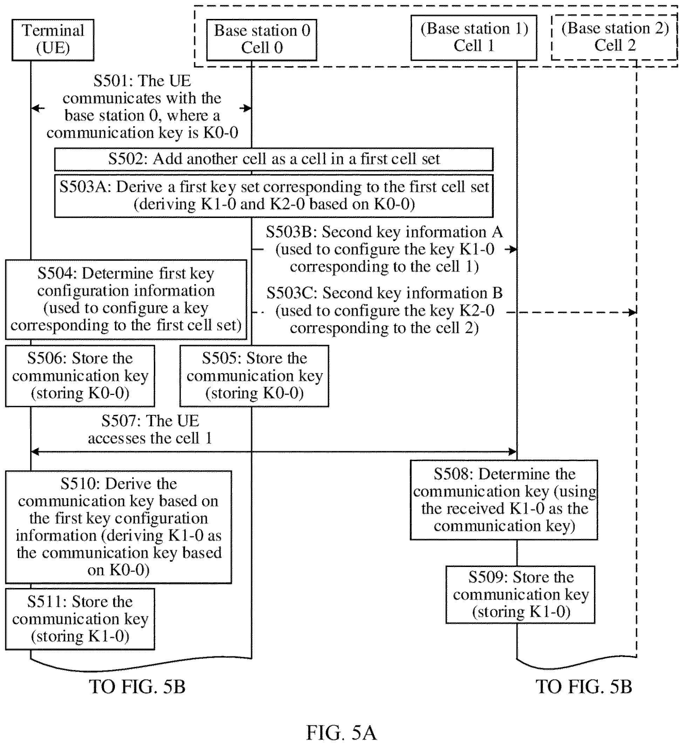

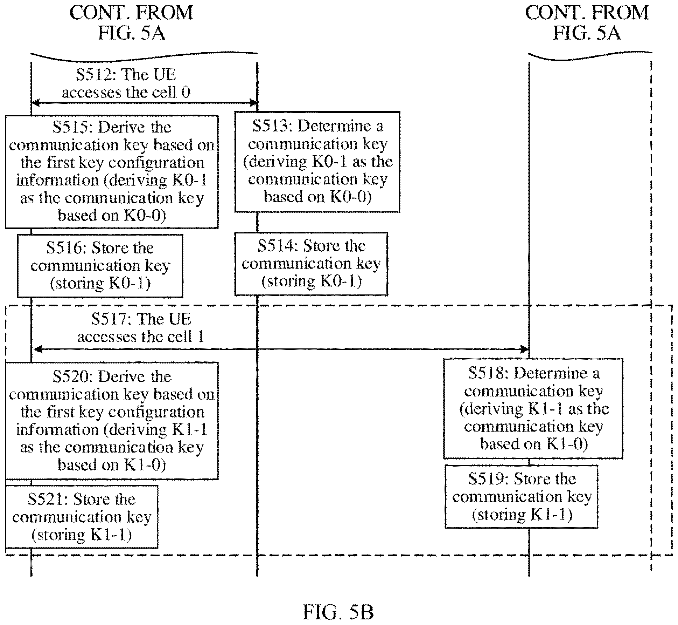

Next, FIG. 5A and FIG. 5B are a schematic flowchart of a communication method according to an embodiment of this application.

S501: A terminal communicates with a base station 0, where a communication key is a first key (an example in which the first key is K0-0 is used for description), that is, security protection of data and/or signaling is performed based on the key K0-0. The security protection includes encryption and/or integrity protection.

S502: The base station 0 adds another cell as a cell in a first cell set.

S503: The base station 0 distributes a key to a network device corresponding to the first cell set.

S504: The base station 0 sends first key configuration information to the terminal, where the first key configuration information is used to configure a key corresponding to a dynamic cell set. It is easy to understand that step S504 is an optional step.

Step S501 to step S504 may be steps the same as S401 to S404 described in the embodiment shown in FIG. 4A and FIG. 4B. Refer to related descriptions in the embodiment shown in FIG. 4A and FIG. 4B.

S505: The base station 0 stores the communication key.

For example, the base station 0 stores a currently used key K0-0 for communication with a UE.

In a possible implementation, the currently used communication key is stored, so that when the UE subsequently hands over from another cell back to a current cell (for example, a cell 0), the base station 0 derives a new key based on the historical key (for example, K0-0).

In another possible implementation, step S505 may be performed between step S501 and step S507, or may be performed after step S507, or may be performed before step S501, and is not limited to being performed after step S504.

S506: The UE stores the communication key.

For example, the UE stores the currently used key K0-0 for communication with the base station 0.

In a possible implementation, the currently used communication key is stored, so that when the UE subsequently hands over from another cell back to the current cell, the UE derives a new key based on the historical key (for example, K0-0).

Optionally, when the UE accesses another base station for a first time, the key (for example, K0-0) may alternatively be used to derive communication keys (for example, K1-0 and K2-0 corresponding to a base station 1 and a base station 2) of other base stations. It is easy to understand that a manner in which the UE derives a communication key of another base station is similar to an implementation in which the base station derives the first key set. Refer to related descriptions in step S503.

In another possible implementation, step S506 may be performed between step S501 and step S507, or may be performed after step S507, or may be performed before step S501, and is not limited to being performed after step S505.

S507: The UE accesses a cell 1.

For example, the UE sends an access message to the base station 1.

Step S507 is similar to step S405. Refer to related descriptions of step S405.

S508: The base station 1 determines the communication key.

In a possible manner, the base station 1 uses the received K1-0 as a key for communication with the UE in the cell 1. For example, when the UE accesses the base station 1 for a first time, the base station 1 uses a key (for example, K1-0 in step S503) distributed by the base station 0 as a key for communication with the UE.

In another possible implementation, there is no definite sequence between step S508 and step S507, and step S508 and step S507 may be performed at the same time, or step S508 may be performed before or after step S507. For example, it is not that the base station 1 uses the key after the UE completes access. Instead, in an access process, the base station 1 uses the received K1-0 as the key for communication with the UE.

In another possible implementation, step S508 and step S503 to step S507 may be performed at the same time. For example, the base station 0 is currently adding a cell to the dynamic cell set, and derives a key and sends the key to the base station 1. After obtaining a response from the base station 1, the base station 0 sends NCC to the UE by using dynamic cell set configuration information. At the same time, the UE performs handover. In a handover procedure, the base station 1 uses K1-0 as the key for communication with the UE.

S509: The base station 1 stores the communication key.

For example, the base station 1 stores the currently used key K1-0 for communication with the UE.

Step S509 is similar to step S505. Refer to related descriptions of step S505.

S510: The UE determines the communication key. Determining the communication key may be understood as deriving the communication key.

In a possible manner, the UE determines the communication key based on one or more of some or all information of the first key configuration information, cell information corresponding to a target cell (for example, the cell 1), and key information corresponding to an original cell.

For example, the UE derives the communication key based on the key information corresponding to the original cell. For example, the UE derives K1-0 as the communication key based on K0-0. For another example, the UE derives K1-0 as the communication key based on K0-0 and the information about the cell 1. It may be understood that, after the UE receives key configuration information sent by the original cell or the key configuration information is predefined, when the UE accesses another cell (for example, the cell 1) in the first cell set for the first time, the UE derives, based on a key (for example, K0-0) corresponding to the original cell, a key corresponding to the cell 1. Optionally, that the UE accesses the cell 1 for the first time is determined based on information about a quantity of access times. The terminal may alternatively be determined in another manner. For example, if the UE stores no historical key corresponding to the cell 1 after accessing the first cell set, that the UE accesses the cell 1 for the first time is determined. In another embodiment, a manner of determining whether access of the UE is a first access is similar, or a manner in which the base station determines whether the access of the UE is the first access is also similar. Optionally, when the UE accesses the cell 1 not for the first time, the UE determines, based on information about the historical key corresponding to the cell 1, a key corresponding to communication with the cell 1.

For descriptions of the first key configuration information, the cell information, and a possible manner in which the UE derives the key, refer to related descriptions in step S404 or step S407.

For example, the UE compares (for example, in step S504) whether received NCC is equal to NCC associated with current KgNB (that is, K0-0). If the received NCC is equal to the NCC associated with current KgNB, the UE horizontally derives KgNB* based on current KgNB. If the received NCC is not equal to the NCC associated with current KgNB, the UE vertically derives KgNB* (to be specific, the UE first synchronizes an NH until local NCC is equal to the received NCC, and the UE vertically derives KgNB* based on the NH existed when the local NCC and the received NCC are equal). KgNB* is the derived key K1-0. The UE uses the key as the communication key with the base station 1.

In another possible implementation, there is no definite sequence between step S510 and step S508, and step S510 and step S508 may be performed at the same time, or step S510 may be performed before or after step S508. For example, the UE first derives the key K1-0 and uses the key K1-0 as the communication key with the base station 1, and then the base station 1 confirms K1-0 as the communication key with the UE.

In another possible implementation, step S510 and step S507 to step S509 may be performed at the same time, or step S510 may be performed before or after step S507 to step S509. For example, in a handover process of the UE (that is, the UE does not completely access the cell 1), the UE derives the key K1-0 before the base station 1, and uses the key K1-0 as the communication key.

In another possible implementation, step S510 and step S503 to step S509 may be performed at the same time. An example is shown in step S508. Details are not described herein again.

In another possible implementation, if the first derivation indication information in step S504 indicates the UE to subsequently use only the horizontal derivation, or a protocol specifies that the UE subsequently uses only the horizontal derivation, the UE may omit determining whether to use the horizontal derivation or the vertical derivation.

In another possible implementation, if the first derivation input parameter indication information in step S504 indicates to use the quantity of access times of the UE as an input parameter for deriving the new key, or the protocol specifies that the quantity of access times of the UE is used as the input parameter for deriving the new key, when the UE derives the new key, in addition to downlink frequency information of the target cell and PCI information of the target cell, information about the quantity of access times needs also to be added.

S511: The UE stores the communication key.

For example, the UE stores the currently used key K1-0 for communication with the base station 1.

In a possible implementation, the currently used communication key is stored as the historical key (for example, K1-0), so that when the UE subsequently hands over from another cell back to the current cell, the UE derives the new key based on the historical key.

Step S511 is similar to step S506. Refer to related descriptions of step 506.

It is easy to understand that the key (for example, K0-0) in step S506 may be further used for derivation of another base station in addition to subsequent key derivation of the base station. In a possible manner, the key (for example, K1-0) in step S511 is used only for subsequent key derivation of the base station. It is easy to understand that an execution sequence of step S511 is not limited in this embodiment of this application. Refer to similar descriptions of step S506.

S512: The UE accesses the cell 0.

For example, the UE sends the access message to the base station 0.

It is easy to understand that a sequence in which the UE accesses the cell is not limited in this embodiment of this application, and S512 is merely an example. That the UE accesses the cell 0 may be understood as that the UE disconnects a connection with the cell 0 before step S512. For example, the UE disconnects the connection with the cell 0 after step S506.

S513: The base station 0 determines a communication key.

It may be understood as that the base station 0 derives the communication key.

For example, the base station 0 derives K0-1 based on information about a historical key and information about the cell 0, and uses K0-1 as the communication key with the UE. The information about the historical key includes a historical key corresponding to the cell 0. For example, the information about the historical key includes a latest historical key (for example, K0-0).

In a possible implementation, the key K1-0 received from the base station 0 is used as the communication key in step S508. However, in step S513, the key K0-1 derived by the base station 0 is used as the communication key, and the key is derived based on the key K0-0 stored in step S505. Optionally, the horizontal derivation is used during derivation, that is, the NCC does not change by default.

Optionally, a method for determining which key to be currently used by the base station (for example, the base station 0) includes: if the base station currently has an unused key sent by the base station 0, using the key. If the base station currently does not have an unused key sent by the base station 0, a historical key of the base station is used to derive a new key.

In another possible implementation, there is no definite sequence between step S513 and step S512, and step S513 and step S512 may be performed at the same time, or step S513 may be performed before or after step S512. For example, it is not that the base station 0 uses the key after the UE completes access. Instead, in an access process, the base station 0 uses derived K0-1 as the key for communication with the UE.

In another possible implementation, when the communication key is derived, the quantity of access times of the UE is added as the input parameter for deriving the new key. In other words, when the new key is derived, in addition to the downlink frequency information of the target cell and the PCI information of the target cell, the information about the quantity of access times needs also to be added.

S514: The base station 0 stores the communication key.

For example, the base station 0 stores the currently used key K0-1 for communication with the UE.

In a possible implementation, the communication key K0-1 is stored, so that when the UE subsequently hands over from another cell back to the current cell, the base station 0 derives the new key based on the historical key.

In a possible implementation, step S514 may be performed at any time of step S513 to step S517, including after step S517 and not limited to after step S513.

S515: The UE determines the communication key.

It may be understood as that the UE derives the communication key.

In a possible manner, the UE determines the communication key based on one or more of some or all information of the first key configuration information, cell information corresponding to the target cell (for example, the cell 1), and information about a historical key of the target cell.

For example, the UE derives the communication key based on the information about the historical key. For example, the UE derives K0-1 as the communication key based on K0-0. For another example, the UE derives K0-1 as the communication key based on K0-0 and the information about the cell 0.

For descriptions of the first key configuration information, the cell information, and the possible manner in which the UE derives the key, refer to related descriptions in step S404 or step S407.

In another possible implementation, the UE determines to update the key configuration information. For example, the UE receives second key configuration information from a serving cell, and replaces the first key configuration information with the second key configuration information. In this manner, a derivation manner may be changed in a process of accessing the dynamic cell set, for example, from derivation based on a key of a respective cell to derivation based on a key of a new cell. This is more flexible.

Step S515 is similar to step S510. Refer to related descriptions of step 510.

In a possible implementation, in step S510, the UE needs to determine, based on the NCC obtained in step S504, whether to use the horizontal derivation or the vertical derivation currently. In step S515, because the UE previously camps on the cell 0 and stores the key K0-0 of the cell 0, when returning to the cell 0, the UE derives the new key based on the historical key. The horizontal derivation is used during derivation, that is, the NCC does not change by default.

Optionally, a method for determining which key to be currently used by the UE includes: if the UE stores a historical key of the current base station, horizontally deriving the new key based on the historical key; or if the UE does not store a historical key of the current base station, deriving a key of the base station based on K0-0.

In another possible implementation, there is no definite sequence between step S515 and step S513, and step S515 and step S513 may be performed at the same time, or step S515 may be performed before or after step S513. For example, the UE first derives the key K1-0 and uses the key K1-0 as the communication key with the base station 1, and then the base station 1 confirms K1-0 as the communication key with the UE.

In another possible implementation, step S515 and step S512 to step S514 may be performed at the same time, or step S515 may be performed before or after step S512 to step S514. For example, in the handover process of the UE (that is, the UE does not completely access the cell 0), the UE derives the key K1-0 before the base station 1, and uses the key K1-0 as the communication key.

In another possible implementation, if the first derivation input parameter indication information in step S504 indicates to use the quantity of access times of the UE as the input parameter for deriving the new key, or the protocol specifies that the quantity of access times of the UE is used as the input parameter for deriving the new key, when the UE derives the new key, in addition to the downlink frequency information of the target cell and the PCI information of the target cell, the information about the quantity of access times needs also to be added.

S516: The UE stores the communication key.

For example, the UE stores the currently used key K0-1 for communication with the base station 0.

In a possible implementation, the currently used communication key (for example, K0-1) is stored as the historical key, so that when the UE subsequently hands over from another cell back to the current cell, the UE derives the new key based on the historical key.

Step S516 is similar to step S511. Refer to related descriptions of step 511.

S517: The UE accesses the cell 1.

S518: The base station 1 determines a communication key.

For example, the base station 1 derives K1-1 based on K1-0 and uses K1-1 as the key for communication with the UE.

S519: The base station 1 stores the communication key.

For example, the base station 1 and the base station 0 store the currently used key K1-1 for communication with the UE.

S520: The UE determines the communication key.

For example, the UE derives K1-1 as the communication key based on K1-0 and the information about the cell 1.

S521: The UE stores the communication key.

For example, the UE stores the currently used key K1-1 for communication with the base station 1.

Step S517 to step S521 are similar to step S512 to step S516. Refer to related descriptions.

It is easy to understand that the steps in the foregoing method are merely examples, and are not limited to mandatory steps. For example, step S517 to step S521 are optional steps.

In embodiments in FIG. 4A, FIG. 4B, FIG. 5A, and FIG. 5B, an example in which the cell 0 to the cell 2 are of different base stations is used for description. It is easy to understand that the cell 0 to the cell 2 may alternatively be of a same base station. That is, the cells in the cell set may correspond to a same base station or correspond to different base stations. For example, the base station 0 and the base station 1 may be a same base station or different base stations. This is not limited in embodiments of this application.

According to the foregoing method, the key corresponding to the cell set is maintained. This ensures communication security.

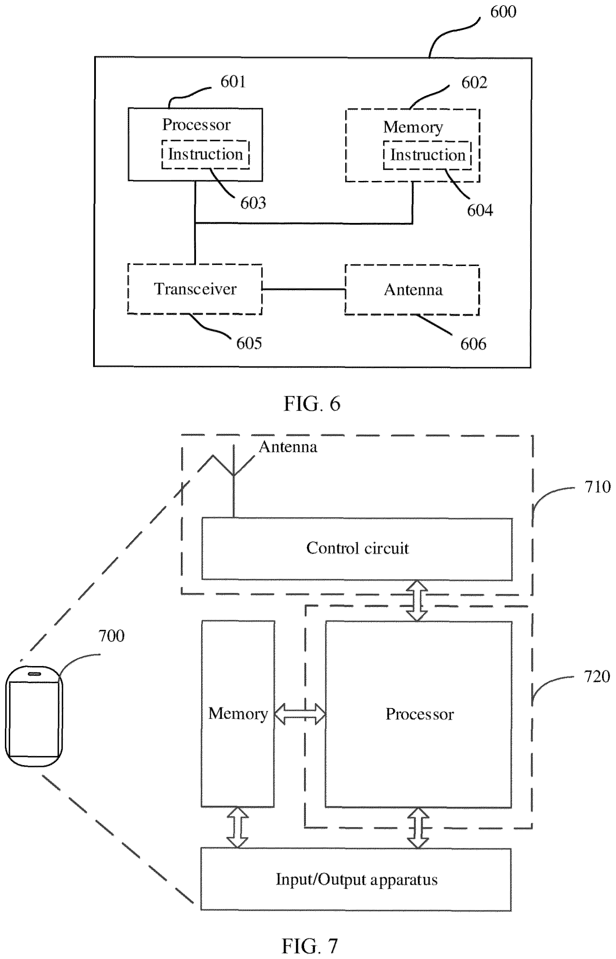

FIG. 6 is a diagram of a structure of a communication apparatus according to an embodiment of this application. A communication apparatus 600 may be the communication apparatus 30 in FIG. 1A, or may be the terminal device in FIG. 1B, FIG. 1C, or FIG. 1D, and is configured to implement the method corresponding to the terminal device in the foregoing method embodiments. Alternatively, the communication apparatus may be the first network device or the second network device in FIG. 1A to FIG. 1D, or the network device in the RAN in FIG. 1C or FIG. 1D, for example, a CU, a DU, a CU-CP, or a CU-UP, and is configured to implement the method corresponding to the first network device or the second network device in the foregoing method embodiments. For a specific function, reference may be made to the descriptions in the foregoing method embodiments.

The communication apparatus 600 includes one or more processors 601. The processor 601 may also be referred to as a processing unit, and may implement a specific control function. The processor 601 may be a general-purpose processor, a dedicated processor, or the like. For example, the processor 601 includes: a baseband processor, a central processing unit, an application processor, a modem processor, a graphics processing unit, an image signal processor, a digital signal processor, a video codec processor, a controller, a memory, and/or a neural-network processing unit. The baseband processor may be configured to process a communication protocol and communication data. The central processing unit may be configured to control the communication apparatus 600, execute a software program, and/or process data. Different processors may be independent components, or may be integrated into one or more processors, for example, integrated into one or more application-specific integrated circuits.

Optionally, the communication apparatus 600 includes one or more memories 602. The memory 602 is configured to store instructions 604, and the instructions may be run on the processor, to enable a terminal device 600 to perform the methods described in the foregoing method embodiments. Optionally, the memory 602 may further store data. The processor and the memory may be separately disposed, or may be integrated together.

Optionally, the communication apparatus 601 may include instructions 603 (which may also be referred to as code or a program sometimes), and the instructions 603 may be run on the processor, to enable the communication apparatus 600 to perform the methods described in the foregoing embodiments. The processor 601 may store data.

Optionally, the communication apparatus 600 may further include a transceiver 605 and an antenna 606. The transceiver 605 may be referred to as a transceiver unit, a transceiver machine, a transceiver circuit, a transceiver, an input/output interface, or the like, and is configured to implement a transceiver function of the communication apparatus 600 through the antenna 606.

Optionally, the communication apparatus 600 may further include one or more of the following components: a wireless communication module, an audio module, an external memory interface, an internal memory, a universal serial bus (universal serial bus, USB) interface, a power management module, an antenna, a loudspeaker, a microphone, an input/output module, a sensor module, a motor, a camera, a display, or the like. It may be understood that, in some embodiments, a UE 600 may include more or fewer components, or some components may be integrated, or some components may be split. These components may be hardware, software, or a combination implementation of software and hardware.

The processor 601 and the transceiver 605 described in this application may be implemented in an integrated circuit (integrated circuit, IC), an analog IC, a radio frequency integrated circuit (radio frequency identification, RFID), a hybrid signal IC, an application-specific integrated circuit (application-specific integrated circuit, ASIC), a printed circuit board (printed circuit board, PCB), an electronic device, or the like. The communication apparatus that implements the communication apparatus described in this specification may be an independent device (for example, an independent integrated circuit and a mobile phone), or may be a part of a larger device (for example, a module that may be embedded in another device). For details, refer to the foregoing descriptions of the terminal device and the network device. Details are not described herein again.

An embodiment of this application provides a terminal device. The terminal device (referred to as a UE for ease of description) may be used in the foregoing embodiments. The terminal device includes corresponding means (means), units, and/or circuits for implementing functions of the UE in the foregoing embodiments. For example, the terminal device includes a transceiver module, configured to support the terminal device in implementing a transceiver function, and a processing module, configured to support the terminal device in processing a signal.

FIG. 7 is a diagram of a structure of a terminal device according to an embodiment of this application.

A terminal device 700 may be used in the system shown in FIG. 1A to FIG. 1D. For ease of description, FIG. 7 shows only main components of the terminal device 700. As shown in FIG. 7, the terminal device 700 includes a processor, a memory, a control circuit, an antenna, and an input/output apparatus. The processor is mainly configured to: process a communication protocol and communication data, control the entire terminal device 700, execute a software program, and process data of the software program. The memory is mainly configured to store the software program and the data. The control circuit is mainly configured to: perform conversion between a baseband signal and a radio frequency signal, and process the radio frequency signal. The antenna is mainly configured to send and receive the radio frequency signal in a form of an electromagnetic wave. The input/output apparatus, for example, a touchscreen, a display, a microphone, or a keyboard, is mainly configured to receive data entered by a user and output data to the user.

For example, the terminal device 700 is a mobile phone. After the terminal device 700 is powered on, the processor may read a software program in a storage unit, explain and execute instructions of the software program, and process the data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in the form of an electromagnetic wave through the antenna. When data is sent to the terminal device 700, the control circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 7 shows only one memory and one processor. In some embodiments, the terminal device 700 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device 700, execute the software program, and process the data of the software program. Functions of the baseband processor and the central processing unit are integrated into the processor in FIG. 7. A person skilled in the art may understand that the baseband processor and the central processing unit each may be an independent processor, and are interconnected by using a technology such as a bus. The terminal device 700 may include a plurality of baseband processors to adapt to different network standards, and the terminal device 700 may include a plurality of central processing units to enhance a processing capability of the terminal device 700. Components of the terminal device 700 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program. The processor executes the software program to implement a baseband processing function.

In an example, the antenna and the control circuit that have a transceiver function may be considered as a transceiver unit 710 of the terminal device 700, and the processor that has a processing function may be considered as a processing unit 720 of the terminal device 700. As shown in FIG. 7, the terminal device 700 includes the transceiver unit 710 and the processing unit 720. The transceiver unit may also be referred to as a transceiver, a transceiver machine, a transceiver apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like.

An embodiment of this application further provides a network device, and the network device may be used in the foregoing embodiments. The network device includes means (means), units, and/or circuits for implementing the functions of the first network device or the second network device in the foregoing embodiments. For example, the network device includes a transceiver module, configured to implement a transceiver function by the network device, and a processing module, configured to support the network device in processing a signal. It may be understood that the first network device and the second network device are relative to one or more UEs, and relative to some other UEs, the functions of the first network device and the second network device may be interchanged.

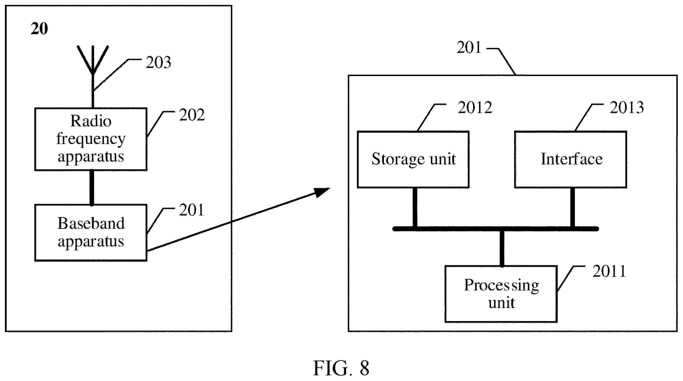

FIG. 8 is a diagram of a structure of a network device according to an embodiment of this application. As shown in FIG. 8, a network device 20 may be used in the system shown in FIG. 1A to FIG. 1D. The network device 20 may serve as a first network device that is relative to one or more UEs and that has functions of the first network device, or may serve as a second network device that is relative to one or more UEs and that has functions of the second network device. The network device includes a baseband apparatus 201, a radio frequency apparatus 202, and an antenna 203. In an uplink direction, the radio frequency apparatus 202 receives, through the antenna 203, information sent by a terminal device, and sends the information sent by the terminal device to the baseband apparatus 201 for processing. In a downlink direction, the baseband apparatus 201 processes information from the terminal device and sends processed information to the radio frequency apparatus 202, and the radio frequency apparatus 202 processes the information from the terminal device and then sends processed information to the terminal device through the antenna 201.

The baseband apparatus 201 includes one or more processing units 2011, a storage unit 2012, and an interface 2013. The processing unit 2011 is configured to support the network device in performing functions of the network device in the foregoing method embodiments. The storage unit 2012 is configured to store a software program and/or data. The interface 2013 is configured to exchange information with the radio frequency apparatus 202. The interface includes an interface circuit, and is configured to input and output information. In an implementation, the processing unit is an integrated circuit, for example, one or more ASICs, one or more DSPs, one or more FPGAs, or a combination of these types of integrated circuits. These integrated circuits may be integrated together to form a chip. The storage unit 2012 may be located in a same chip as the processing unit 2011, that is, may be an on-chip storage element. Alternatively, the storage unit 2012 may be located on a different chip from the processing unit 2011, that is, may be an off-chip storage element. The storage unit 2012 may be one memory, or may be a collective name of a plurality of memories or storage elements.

The network device may implement some or all of the steps in the foregoing method embodiments in a form of scheduling programs by using one or more processing units, for example, implement corresponding functions of the network device in the foregoing embodiments. The one or more processing units may support radio access technologies of a same standard, or may support radio access technologies of different standards.

This application further provides a computer-readable storage medium. The computer-readable medium stores a computer program. When the computer program is executed by a computer, a function of any one of the foregoing method embodiments is implemented.

This application further provides a computer program product. The computer product includes a computer program (which may also be referred to as code or instructions). When the computer program product is executed by a computer, a function of any one of the foregoing method embodiments is implemented.

A person of ordinary skill in the art may be aware that, in combination with the examples described in embodiments disclosed in this specification, units and steps may be implemented by electronic hardware or a combination of computer software and electronic hardware. Whether these functions are performed by hardware or software depends on particular applications and design constraints of the technical solutions. A person skilled in the art may use different methods to implement the described functions for each specific application. However, it should not be considered that the implementation goes beyond the scope of embodiments of this application.

In the several embodiments provided in this application, it should be understood that the disclosed systems, apparatuses, and methods may be implemented in other manners. For example, the described apparatus embodiments are merely examples. For example, division into the units is merely logical function division. The units described as separate components may or may not be physically separate, and components displayed as units may or may not be physical units, may be located in one position, or may be distributed on a plurality of network units. Some or all of the units may be selected based on actual requirements to achieve objectives of the solutions of embodiments.

When the functions are implemented in a form of a software functional unit and sold or used as an independent product, the functions may be stored in a computer-readable storage medium. Based on such an understanding, the technical solutions in this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc storage, a magnetic disk storage medium or another magnetic storage device, or any other medium that can be used to carry or store expected program code in a form of instructions or a data structure and that can be accessed by the computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall in the protection scope of embodiments of this application. Therefore, the protection scope of embodiments of this application shall be subject to the protection scope of the claims.

## Claims

1. A communication method, comprising:
communicating with a first network device in a first cell of the first network device by using a first key; and
determining first key configuration information, wherein the first key configuration information is used to configure a key corresponding to a first cell set, the first key configuration information comprises one or more of first derivation configuration information, first derivation indication information, and first input parameter indication information, the first derivation configuration information indicates to perform derivation based on a first specified key, the first derivation indication information indicates a derivation manner, the derivation manner comprises horizontal derivation or vertical derivation, and the first input parameter indication information indicates to use a quantity of access times as an input parameter for deriving a key.

2. The method according to claim 1, wherein the method further comprises:
determining a second key based on the first key configuration information, wherein the second key is a key for communication with a network device corresponding to a second cell in the first cell set.

3. The method according to claim 1 or 2, wherein the determining first key configuration information comprises:
receiving the first key configuration information from the first network device; or
predefining or preconfiguring the first key configuration information.

4. The method according to any one of claims 1 to 3, wherein the method further comprises: sending an access message to the second cell.

5. The method according to any one of claims 2 to 4, wherein the determining a second key based on the first key configuration information comprises:
determining the second key based on the first key configuration information and cell information corresponding to the second cell, wherein the cell information comprises one or more of downlink frequency information and physical cell identifier information.

6. The method according to any one of claims 1 to 5, wherein the first specified key comprises the first key, a latest historical key in one or more historical keys corresponding to the second cell, or a key corresponding to an original cell, and the original cell is a cell that determines the first cell set.

7. The method according to any one of claims 1 to 6, wherein the method further comprises: determining the first cell set or updating the first cell set.

8. The method according to any one of claims 1 to 7, wherein the method further comprises:
storing the first key, and after a connection with the first cell is disconnected, using the first key as a historical key corresponding to the first cell; and/or
storing the second key, and after a connection with the second cell is disconnected, using the second key as a historical key corresponding to the second cell.

9. The method according to any one of claims 1 to 8, wherein the quantity of access times comprises a quantity of times of accessing a cell in the first cell set, and/or a quantity of times of accessing a cell in the first cell set and a quantity of times of accessing a cell not in the first cell set, and/or a quantity of times of accessing the second cell.

10. The method according to any one of claims 1 to 9, wherein the first derivation indication information indicates a terminal to determine, in a horizontal derivation manner, a key for accessing the cell in the first cell set.

11. A communication method, comprising:
communicating with a terminal in a first cell by using a first key;
deriving a first key set, wherein the first key set comprises Q keys, there is a correspondence between the Q keys and N cells in a first cell set, the N cells are cells of M network devices, the first cell set corresponds to the terminal, and Q, N, and M are integers greater than or equal to 1; and
sending second key information to a network device corresponding to a second cell in the first cell set, wherein the second key information comprises a second candidate key, the first key set comprises the second candidate key, and the second key information is used to configure a key corresponding to the second cell.

12. The method according to claim 11, wherein the method further comprises:
sending first key configuration information to the terminal, wherein the first key configuration information is used to configure a key corresponding to the first cell set, the first key configuration information comprises one or more of first derivation configuration information, first derivation indication information, and first input parameter indication information, the first derivation configuration information indicates to perform derivation based on a first specified key, the first derivation indication information indicates a derivation manner, the derivation manner comprises horizontal derivation or vertical derivation, the first input parameter indication information indicates to use a quantity of access times of the terminal as an input parameter for deriving a key, and the first cell set corresponds to the terminal.

13. The method according to claim 11 or 12, wherein the deriving a first key set comprises:
deriving the first key set based on one or more of the first key, next hop information, and information about a cell in the first cell set, wherein the cell information comprises one or more of downlink frequency information and physical cell identifier information.

14. The method according to any one of claims 11 to 13, wherein the first specified key comprises the first key or a latest historical key in one or more historical keys corresponding to a target cell of the terminal in the first cell set.

15. The method according to any one of claims 11 to 14, wherein the first derivation indication information indicates the terminal to determine, in a horizontal derivation manner, a key for accessing the cell in the first cell set.

16. The method according to any one of claims 11 to 15, wherein the quantity of access times comprises a quantity of times of accessing the cell in the first cell set by the terminal, and/or a quantity of times of accessing the cell in the first cell set and a quantity of times of accessing a cell not in the first cell set by the terminal, and/or a quantity of times of accessing a specific cell in the first cell set.

17. The method according to any one of claims 11 to 16, wherein that there is a correspondence between the Q keys and N cells in a first cell set comprises: the Q keys are in one-to-one correspondence with the N cells, wherein Q=N.

18. The method according to any one of claims 11 to 17, wherein the deriving a first key set comprises:
when deriving the first key set, using the quantity of access times of the terminal as one of derivation input parameters.

19. The method according to any one of claims 11 to 18, wherein the method further comprises:
determining the first cell set, wherein the determining the first cell set comprises: obtaining the first cell set, or updating the first cell set.

20. The method according to any one of claims 11 to 19, wherein the method further comprises: storing the first key, and after disconnecting a connection with the terminal in the first cell, using the first key as a historical key corresponding to the first cell.

21. The method according to any one of claims 11 to 20, wherein the method further comprises:
disconnecting the connection with the terminal in the first cell.

22. The method according to claim 21, wherein the method further comprises:
receiving an access message from the terminal, wherein the access message indicates to access the first cell; and
determining a third key, wherein the third key is a key for communication with the terminal in the first cell.

23. The method according to claim 22, wherein the determining a third key comprises:
determining the third key based on a latest historical key in one or more historical keys corresponding to the first cell.

24. The method according to claim 23, wherein the method further comprises: storing the third key, and after disconnecting the connection with the terminal in the first cell, using the third key as the historical key corresponding to the first cell.

25. The method according to claim 22, wherein the determining a third key comprises:
receiving at least one key that is corresponding to the first cell and that is sent by at least one of the M network devices; and
determining the third key based on a latest key in the at least one key.

26. A communication method, comprising:
receiving second key information sent by a first network device, wherein the second key is used to configure a key corresponding to a second cell in a first cell set, the second key information comprises a second candidate key, the first network device is a network device corresponding to a first cell in the first cell set, and the first cell set corresponds to a terminal; and
determining a second key based on one or more of the second key information, a latest historical key in one or more historical keys corresponding to the second cell, and a quantity of access times, wherein the historical key comprises a historical key between the terminal and the second cell, and the second key is a key for communication with the terminal in the second cell.

27. The method according to claim 26, wherein the determining a second key comprises:
when the terminal accesses the second cell for a first time, using the second candidate key as the second key.

28. The method according to claim 26, wherein the determining a second key comprises:
when the terminal accesses the second cell not for a first time, determining the second key based on the latest historical key in the one or more historical keys corresponding to the second cell.

29. The method according to any one of claims 26 to 28, wherein the method further comprises:
receiving an access message from the terminal.

30. The method according to any one of claims 26 to 29, wherein the method further comprises:
storing the second key, and after disconnecting a connection with the terminal in the second cell, using the second key as a historical key corresponding to the second cell.

31. A communication apparatus, comprising:
a processing unit, configured to communicate with a first network device in a first cell of the first network device by using a first key, wherein
the processing unit is further configured to determine first key configuration information, wherein the first key configuration information is used to configure a key corresponding to a first cell set, the first key configuration information comprises one or more of first derivation configuration information, first derivation indication information, and first input parameter indication information, the first derivation configuration information indicates to perform derivation based on a first specified key, the first derivation indication information indicates a derivation manner, the derivation manner comprises horizontal derivation or vertical derivation, and the first input parameter indication information indicates to use a quantity of access times as an input parameter for deriving a key.

32. The apparatus according to claim 31, wherein the processing unit is further configured to:
determine a second key based on the first key configuration information, wherein the second key is a key for communication with a network device corresponding to a second cell in the first cell set.

33. The apparatus according to claim 31 or 32, wherein the communication apparatus comprises a transceiver unit, and the transceiver unit is configured to receive the first key configuration information from the first network device; or
the first key configuration information is predefined or preconfigured.

34. The apparatus according to any one of claims 31 to 33, wherein the transceiver unit is further configured to:
send an access message to the second cell.

35. The apparatus according to any one of claims 32 to 34, wherein the processing unit is configured to determine the second key based on the first key configuration information and cell information corresponding to the second cell, wherein the cell information comprises one or more of downlink frequency information and physical cell identifier information.

36. The apparatus according to any one of claims 31 to 35, wherein the first specified key comprises the first key, a latest historical key in one or more historical keys corresponding to the second cell, or a key corresponding to an original cell, and the original cell is a cell that determines the first cell set.

37. The apparatus according to any one of claims 31 to 36, wherein the processing unit is configured to:
determine the first cell set or update the first cell set.

38. The apparatus according to any one of claims 31 to 37, wherein the processing unit is configured to:
store the first key, and after a connection with the first cell is disconnected, use the first key as a historical key corresponding to the first cell; and/or
store the second key, and after a connection with the second cell is disconnected, use the second key as a historical key corresponding to the second cell.

39. The apparatus according to any one of claims 31 to 38, wherein the quantity of access times comprises a quantity of times of accessing a cell in the first cell set, and/or a quantity of times of accessing a cell in the first cell set and a quantity of times of accessing a cell not in the first cell set, and/or a quantity of times of accessing the second cell.

40. The apparatus according to any one of claims 31 to 39, wherein the first derivation indication information indicates the terminal to determine, in a horizontal derivation manner, a key for accessing the cell in the first cell set.

41. A communication apparatus, comprising:
a processing unit, configured to communicate with a terminal in a first cell by using a first key, wherein
the processing unit is further configured to derive a first key set, wherein the first key set comprises Q keys, there is a correspondence between the Q keys and N cells in a first cell set, the N cells are cells of M network devices, the first cell set corresponds to the terminal, and Q, N, and M are integers greater than or equal to 1; and
a transceiver unit, configured to send second key information to a network device corresponding to a second cell in the first cell set, wherein the second key information comprises a second candidate key, the first key set comprises the second candidate key, and the second key information is used to configure a key corresponding to the second cell.

42. The apparatus according to claim 41, wherein the transceiver unit is configured to:
send first key configuration information to the terminal, wherein the first key configuration information is used to configure a key corresponding to the first cell set, the first key configuration information comprises one or more of first derivation configuration information, first derivation indication information, and first input parameter indication information, the first derivation configuration information indicates to perform derivation based on a first specified key, the first derivation indication information indicates a derivation manner, the derivation manner comprises horizontal derivation or vertical derivation, the first input parameter indication information indicates to use a quantity of access times of the terminal as an input parameter for deriving a key, and the first cell set corresponds to the terminal.

43. The apparatus according to claim 41 or 42, wherein the processing unit is configured to:
derive the first key set based on one or more of the first key, next hop information, and information about a cell in the first cell set, wherein the cell information comprises one or more of downlink frequency information and physical cell identifier information.

44. The apparatus according to any one of claims 41 to 43, wherein the first specified key comprises the first key or a latest historical key in one or more historical keys corresponding to a target cell of the terminal in the first cell set.

45. The apparatus according to any one of claims 41 to 44, wherein the first derivation indication information indicates the terminal to determine, in a horizontal derivation manner, a key for accessing the cell in the first cell set.

46. The apparatus according to any one of claims 41 to 45, wherein the quantity of access times comprises a quantity of times of accessing the cell in the first cell set by the terminal, and/or a quantity of times of accessing the cell in the first cell set and a quantity of times of accessing a cell not in the first cell set by the terminal, and/or a quantity of times of accessing a specific cell in the first cell set.

47. The apparatus according to any one of claims 41 to 46, wherein that there is a correspondence between the Q keys and N cells in a first cell set comprises:
the Q keys are in one-to-one correspondence with the N cells, wherein Q=N.

48. The apparatus according to any one of claims 41 to 47, wherein the processing unit is configured to:
when deriving the first key set, use the quantity of access times of the terminal as one of derivation input parameters.

49. The apparatus according to any one of claims 41 to 48, wherein the processing unit is configured to:
determine the first cell set, wherein the determining the first cell set comprises: obtaining the first cell set, or updating the first cell set.

50. The apparatus according to any one of claims 41 to 49, wherein the processing unit is configured to: store the first key, and after disconnecting a connection with the terminal in the first cell, use the first key as a historical key corresponding to the first cell.

51. The apparatus according to any one of claims 41 to 50, wherein the processing unit is configured to:
disconnect the connection with the terminal in the first cell.

52. The apparatus according to claim 51, wherein the transceiver unit is configured to:
receive an access message from the terminal, wherein the access message indicates to access the first cell; and
determine a third key, wherein the third key is a key for communication with the terminal in the first cell.

53. The apparatus according to claim 52, wherein the processing unit is configured to:
determine the third key based on a latest historical key in one or more historical keys corresponding to the first cell.

54. The apparatus according to claim 53, wherein the processing unit is configured to:
store the third key, and after disconnecting the connection with the terminal in the first cell, use the third key as the historical key corresponding to the first cell.

55. The apparatus according to claim 52, wherein the transceiver unit is configured to:
receive at least one key that is corresponding to the first cell and that is sent by at least one of the M network devices; and
determine the third key based on a latest key in the at least one key.

56. A communication apparatus, comprising:
a transceiver unit, configured to receive second key information sent by a first network device, wherein the second key is used to configure a key corresponding to a second cell in a first cell set, the second key information comprises a second candidate key, the first network device is a network device corresponding to a first cell in the first cell set, and the first cell set corresponds to a terminal; and
a processing unit, configured to determine a second key based on one or more of the second key information, a latest historical key in one or more historical keys corresponding to the second cell, and a quantity of access times, wherein the historical key comprises a historical key between the terminal and the second cell, and the second key is a key for communication with the terminal in the second cell.

57. The apparatus according to claim 56, wherein the processing unit is configured to:
when the terminal accesses the second cell for a first time, use the second candidate key as the second key.

58. The apparatus according to claim 56, wherein the processing unit is configured to:
when the terminal accesses the second cell not for a first time, determine the second key based on the latest historical key in the one or more historical keys corresponding to the second cell.

59. The apparatus according to any one of claims 56 to 58, wherein the transceiver unit is configured to:
receive an access message from the terminal.

60. The apparatus according to any one of claims 56 to 59, wherein the processing unit is configured to:
store the second key, and after disconnecting a connection with the terminal in the second cell, use the second key as a historical key corresponding to the second cell.

61. A communication apparatus, comprising a processor, wherein the processor is coupled to a memory, the memory is configured to store a program or instructions, and when the program or the instructions are executed by the processor, the apparatus is enabled to perform the method according to any one of claims 1 to 10.

62. A communication apparatus, comprising a processor, wherein the processor is coupled to a memory, the memory is configured to store a program or instructions, and when the program or the instructions are executed by the processor, the apparatus is enabled to perform the method according to any one of claims 11 to 25, or the method according to any one of claims 26 to 30.

63. A computer-readable storage medium, storing a computer program or instructions, wherein when the computer program or the instructions are executed, a computer is enabled to perform the method according to any one of claims 1 to 10, the method according to any one of claims 11 to 25, or the method according to any one of claims 26 to 30.

64. A computer program product comprising instructions, wherein when the computer program product is run, the method according to any one of claims 1 to 10, the method according to any one of claims 11 to 25, or the method according to any one of claims 26 to 30 is performed.

65. A communication system, comprising the communication apparatus according to claim 61 and/or the communication apparatus according to claim 62.
